# EUROPEAN PATENT APPLICATION

(11) **EP 1 775 983 A1**
(43) Date of publication of application: **18.04.2007**
(21) Application number: 06021728.8
(22) Date of filing: 17.10.2006
(51) Int. Cl.: H04Q 7/38

(54) **Apparatus and method for handover in a broadband wireless access communication system comprising relay stations**

(30) Priority: 17.10.2005 KR 20050097744
(71) Applicant: Samsung Electronics Co., Ltd., Yeongtong-gu Suwon-si, Gyeonggi-do (KR)
(72) Inventor: Kang, Hyun-Jeong, Seoul (KR); Joo, Pan-Yuh, Seoul (KR); Son, Jung-Je, Bundang-gu, Seongnam-si Gyeonggi-do (KR); Cho, Jae-Weon, Yeongtong-gu, Suwon-si, Gyeonggi-do (KR); Lim, Hyoung-Kyu, Yeongdeungpo-gu, Seoul (KR); Son, Yeong-Moon, Anyang-si, Gyeonggi-do (KR); Lee, Sung-Jin, Seoul (KR); Lee, Mi-Hyun, Seoul (KR); Hong, Song-Nam, Seoul (KR); Kim, Young-Ho, Yeongtong-gu, Suwon-si Gyeonggi-do (KR)
(74) Representative: Grünecker, Kinkeldey, Stockmair & Schwanhäusser Anwaltssozietät

(57) **Abstract**

Provided are an apparatus and a method for handling a handover in multi-hop relay Broadband Wireless Access (BWA) system. In a communication method of a Relay Station (RS) in a multi-hop relay BWA system, a handover request message including a candidate node list is received from a Base Station (BS), the handover request message is sent to a Mobile Station (MS), and a handover indication message is received from the MS, the handover indication message indicating whether to perform a handover. Communication persistence can be provided for the MS having mobile characteristics, and cell load management and RS configuration/arrangement can be easily accomplished.

## Description

### PRIORITY

This application claims priority under 35 U.S.C. § 119 to an application filed in the Korean Intellectual Property Office on October 17, 2005 and allocated Serial No. 2005-97744, the contents of which are incorporated herein by reference.

### BACKGROUND OF THE INVENTION

### 1. Field of the Invention

The present invention relates generally to a multi-hop relay cellular system, and more particularly, to an apparatus and method for handling handover in multi-hop relay broadband wireless access communication system.

### 2. Description of the Related Art

Recently, extensive research is being conducted to provide various Quality of Service (QoS) features with a data rate of about 100 Mbps in the advanced fourth-generation (4G) communication system. The 4G communication system is evolving to provide mobility, high data rate transmission, and high QoS in a broadband wireless access (BWA) system such as a Local Area Network (LAN) system and a Metropolitan Area Network (MAN) system. Typical examples of the above system are identified in the Institute of Electrical and Electronics Engineers (IEEE) 802.16d system and the IEEE 802.16e system standards.

The IEEE 802.16d system and the BWA system use an Orthogonal Frequency Division Multiplexing (OFDM)/ Orthogonal Frequency Division Multiple Access (OFDMA) scheme. The IEEE 802.16d system considers only a fixed Subscriber Station (SS) and a single cell structure (i.e., the mobility of an SS is not considered). The IEEE 802.16e system considers the mobility of an SS. When the mobility of an SS is considered, the SS will be referred to as a mobile station (MS).

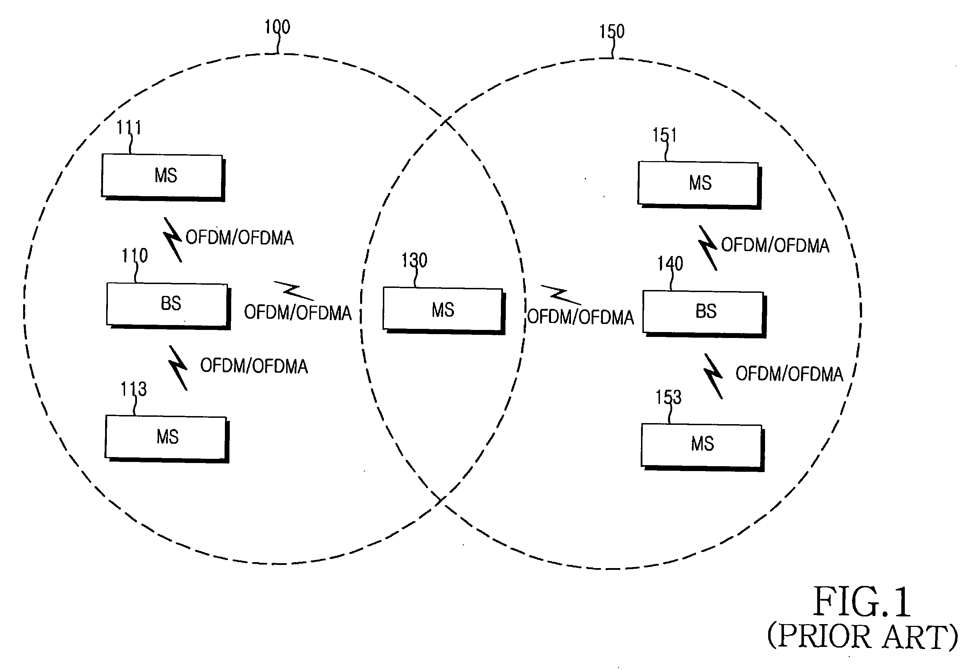

FIG. 1 is a block diagram of a general IEEE 802.16e system.

Referring to FIG. 1, the IEEE 802.16e system has a multi-cell structure. The IEEE 802.16e system includes a cell 100, a cell 150, a base station (BS) 110 managing the cell 100, a BS 140 managing the cell 150, and a plurality of MSs 111, 113, 130, 151 and 153. The signal exchange between the BSs 110 and 140 and the MSs 111, 113, 130, 151 and 153 is performed using an OFDM/OFDMA scheme. The MS 130 is located in a boundary region (i.e., a handover region) between the cells 100 and 150. When the MS 130 moves from the cell 100 of the BS 110 into the cell 150 of the BS 140 while communicating with the BS 110, the serving BS of the MS 130 is changed from the BS 110 to the BS 140.

Because a signaling communication between a stationary BS and an MS is performed through a direct link as illustrated in FIG. 1, the IEEE 802.16e system can easily provide a highly reliable wireless link between the BS and the MS. However, because the BS is stationary, the IEEE 802.16e system has a low flexibility in constructing a wireless network. Accordingly, the used of the IEEE 802.16e system makes it difficult to provide an efficient communication service in a radio environment where traffic distribution or call requirements change frequently.

In order to overcome this problem, a stationary Relay Station (RS), a mobile RS or general MSs can be used to apply a multi-hop relay data transmission scheme to a general cellular communication system such as the IEEE 802.16e system. The use of the multi-hop relay wireless communication system makes it possible to reconfigure a network in rapid response to a change in the communication environment and to operate the entire wireless network more efficiently. For example, the multi-hop relay wireless communication system can expand a cell coverage area and increase a system capacity. When channel conditions between a BS and an MS are poor, an RS is installed between the BS and the MS to establish a multi-hop relay link therebetween, thereby making it possible to provide the MS with a radio channel having better channel conditions. In addition, the multi-hop relay scheme is used in a cell boundary region with poor channel conditions, thereby making it possible to provide a high-rate data channel and to expand the cell coverage area.

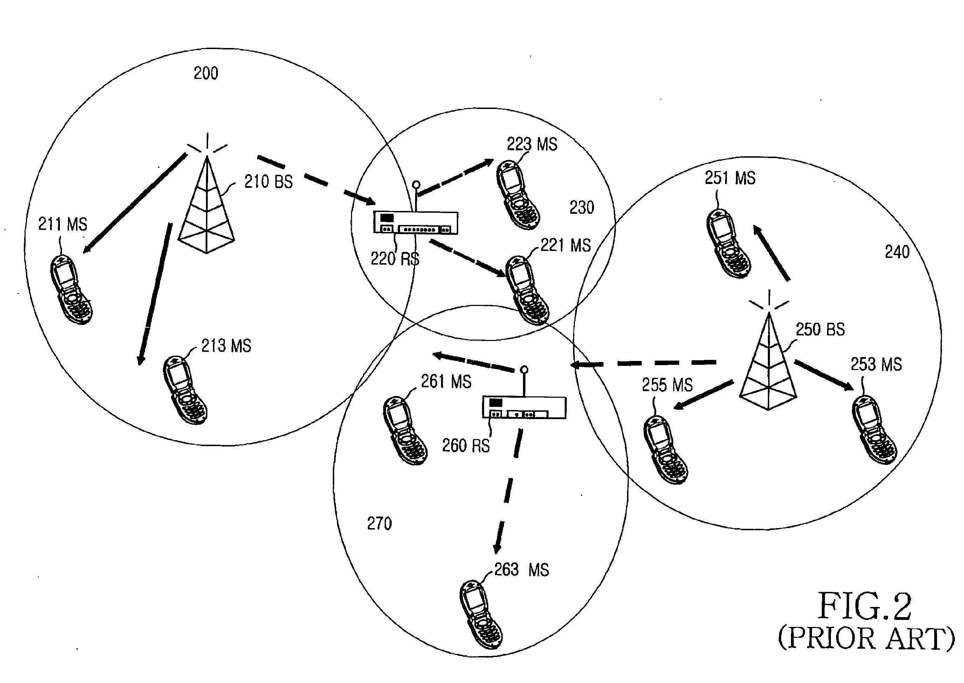

FIG. 2 is a block diagram illustrating a BWA system that uses a multi-hop relay scheme to expand a BS coverage area.

Referring to FIG. 2, the multi-hop relay BWA system has a multi-cell structure. The multi-hop relay BWA system includes a cell 200, a cell 240, a BS 210 managing the cell 200, a BS 250 managing the cell 240, a plurality of MSs 211 and 213 located within the cell 200, a plurality of MSs 221 and 223 located in a region 230 outside the cell 200 of the BS 210 and communicating with the BS 210, an RS 220 providing a multi-hop relay path between the BS 210 and the MSs 221 and 223 located in the region 230, a plurality of MSs 251, 253 and 255 located in the cell 240, a plurality of MSs 261 and 263 located in a region 270 outside the cell 240 of the BS 250 and communicating with the BS 250, and an RS 260 providing a multi-hop relay path between the BS 250 and the MSs 261 and 263 located in the region 270. An OFDM/OFDMA scheme is used for communication among the BS 210 and 250, the RS 220 and 260, and the MSs 211, 213, 221, 223, 251, 253, 255, 261, and 263.

Although the MSs 211 and 213 located in the cell 200 and the RS 220 can directly communicate with the BS 210, the MSs 221 and 223 located in the region 230 cannot directly communicate with the BS 210. Therefore, the RS 220 covers the region 230 to relay signals between the BS 210 and the MSs 221 and 223. That is, the MSs 221 and 223 can communicate with the BS 210 through the RS 220. Further, the RS 260 and the MSs 251, 253, and 255 located in the cell 240 can directly communicate with the BS 250, the MSs 261 and 263 located in the region 270 cannot directly communicate with the BS 250. Therefore, the RS 260 covers the region 270 to relay signals between the BS 250 and the MSs 261 and 263. That is, the MSs 261 and 263 can communicate with the BS 250 through the RS 260.

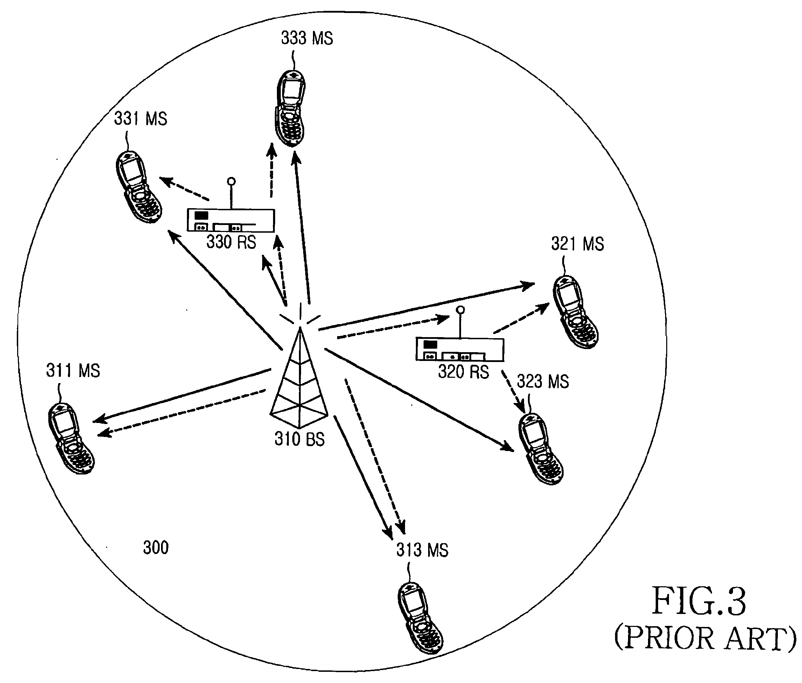

FIG. 3 is a block diagram illustrating a BWA system that uses a multi-hop relay scheme to increase a system capacity.

Referring to FIG. 3, the multi-hop relay BWA system includes a BS 310, a plurality of MSs 311, 313, 321, 323, 331, and 333, and RSs 320 and 330 providing multi-hop paths between the BS 310 and the MSs 311, 313, 321, 323, 331, and 333. The BS 310, the MSs 311, 313, 321, 323, 331, and 333, and the RSs 320 and 330 communicate with one another by an OFDM/OFDMA scheme. The BS 310 manages a cell 300. The RSs 320 and 330 and the MSs 311, 313, 321, 323, 331, and 333 that are in the cell 300 directly communicate with the BS 310.

When some MSs 321, 323, 331, and 333 are in a boundary region of the cell 300, Signal to Noise Ratios (SNRs) of direct links between the BS 310 and the MSs 321, 323, 331, and 333 can be low. In this case, the RS 320 relays unicast traffic between the BS 310 and the MSs 321 and 323. The MSs 321 and 323 make unicast communication with the BS via the RS 320. Further, the RS 330 relays unicast traffic between the BS 310 and the MSs 331 and 333. The MSs 331 and 333 make unicast communication with the BS via the RS 330. The RSs 320 and 330 provide high-rate data paths to the MSs 321, 323, 331, and 333, thereby increasing the effective transfer rates of the MSs 321, 323, 331, and 333 and the capacity of the multi-hop relay BWA system.

In the multi-hop relay BWA systems of FIGS. 2 and 3, the RSs 220, 260, 320, and 330 can be infrastructure RSs that are installed by a service provider and managed by the BSs 210, 250, and 310 or can be client RSs that operate as SSs, MSs, or RSs according to situations. Further, the RSs 220, 260, 320, and 330 can be stationary RSs, nomadic RSs such as notebooks, or mobile RSs having mobility like the MS.

In such a multi-hop relay wireless communication system, a serving BS can request a handover of an MS located in its cell to reduce load on the cell. Besides, when the configuration and arrangement of RSs of the cell are changed, a serving RS can request a handover of an MS connected thereto. Therefore, when the serving BS or RS requests a handover of an MS in the multi-hop relay wireless communication system, specific procedures are required to handle the request for the handover of the MS.

### SUMMARY OF THE INVENTION

An object of the present invention is to substantially solve at least the above problems and/or disadvantages and to provide at least the advantages below. Accordingly, an object of the present invention is to provide an apparatus and method for handling a handover at a request of a serving station in a multi-hop relay BWA system.

Another object of the present invention is to provide an apparatus and method for providing communication persistence to an MS that is handed over to a target node in a multi-hop relay BWA system.

A further another object of the present invention is to provide an apparatus and method for handling a request of a serving station for an handover of an MS when cell load or RS arrangement is changed in a multi-hop relay BWA system.

According to one aspect of the present invention, there is provided a method of handling a handover in a multi-hop relay cellular communication system, the method includes preparing a candidate node list at a serving BS by collecting handover related information from neighboring nodes for the handover of the MS when an MS has to be handed over; transmitting a handover request message including the candidate node list from the serving BS to an RS communicating with the MS; transmitting the handover request message from the RS to the MS; and transmitting a handover indication message from the MS to the RS that indicates whether to perform the handover.

According to one aspect of the present invention, there is provided a method of handling a handover in a multi-hop relay cellular communication system, the method includes preparing a candidate node list at a serving BS by collecting handover related information from neighboring nodes for the handover of the MS when an MS has to be handed over; transmitting a handover request message including the candidate node list from the RS to the MS; and transmitting a handover indication message from the MS to the RS that indicates whether to perform the handover.

According to one aspect of the present invention, there is provided a communication method of an RS in a multi-hop relay cellular communication system, the communication method includes forwarding a handover request message from a BS to an MS; forwarding a handover indication message indicating whether to perform a handover from the MS to the BS; and releasing context information of the MS when a message informing of the handover of the MS is received from the BS.

According to one aspect of the present invention, there is provided a apparatus for an RS in a multi-hop relay cellular communication system, the apparatus includes a message generator for generating a handover request message including a candidate node list; a transmitter for converting the handover request message from the message generator into a radio specification format so as to transmit the converted handover request message to an MS; and a message processor for processing a handover indication message received from the MS in response to the handover request message, the handover indication message including information about whether to perform a handover.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a conventional IEEE 802.16e system;
FIG. 2 is a block diagram illustrating a conventional BWA system that uses a multi-hop relay scheme to expand a BS coverage area;
FIG. 3 is a block diagram illustrating a conventional BWA system that uses a multi-hop relay scheme to increase a system capacity;
FIG. 4 is a flowchart for explaining an operation of an MS for processing a handover request from a serving station in a multi-hop relay BWA system according to the present invention;
FIGs. 5A and B is a flowchart for explaining an operation of a serving BS for requesting an MS to perform a handover in a multi-hop relay BWA system according to the present invention;
FIG. 6 is a flowchart for explaining an operation of a serving RS for processing a handover request from a serving BS in a multi-hop relay BWA system according to the present invention;
FIG. 7 is a flowchart for explaining an operation of a serving RS for requesting an MS to perform a handover in a multi-hop relay BWA system according to the present invention;
FIG. 8 is a flowchart for explaining an operation of an RS for preparing a candidate node list to support a handover of an MS in a multi-hop relay BWA system according to the present invention;
FIG. 9 is a flowchart for explaining an operation of a serving BS for processing a handover request from a serving RS in a multi-hop relay BWA system according to the present invention;
FIG. 10 is a flowchart for explaining an operation of a BS of a neighbor cell in a multi-hop relay BWA system according to the present invention;
FIG. 11 is a flowchart for explaining an operation of an RS for receiving the possibility of a handover in a multi-hop relay BWA system according to the present invention;
FIG. 12 is a diagram illustrating handover signal flows among an MS, a BS, and an RS that simply forwards handover control information in a multi-hop relay BWA system according to the present invention;
FIG. 13 is a diagram illustrating signal flows between an MS and a target node for a network re-entry in a multi-hop relay BWA system according to the present invention;
FIG. 14 is a flowchart illustrating an operation of a BS for commanding an RS to send a handover request message to an MS in a multi-hop relay BWA system according to the present invention;
FIG. 15 is a flowchart illustrating an operation of the RS for sending the handover request message to the MS upon receipt of the handover request command from the BS in a multi-hop relay BWA system according to the present invention; and
FIG. 16 is a block diagram illustrating an MS (RS or BS) according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Also, the terms used herein are defined according to the functions of the present invention. The terms may vary depending on user's or operator's intension and usage. The terms used herein must be understood based on the descriptions made herein.

Signaling procedures for processing a handover of an MS requested by a serving station (a serving BS or a serving RS) in a multi-hop relay BWA system will be described in detail.

The multi-hop relay BWA system uses an OFDM scheme or an OFDMA scheme, for example. Accordingly, the multi-hop relay BWA system can transmit physical channel signals using a plurality of subcarriers, thereby enabling high-rate data transmission. In addition, the multi-hop relay BWA system supports a multi-cell structure, thereby supporting the mobility of an MS.

In the following description, a multi-hop relay BWA system is used for explaining the present invention. However, the present invention can be applied to any cellular communication system using a multi-hop relay scheme.

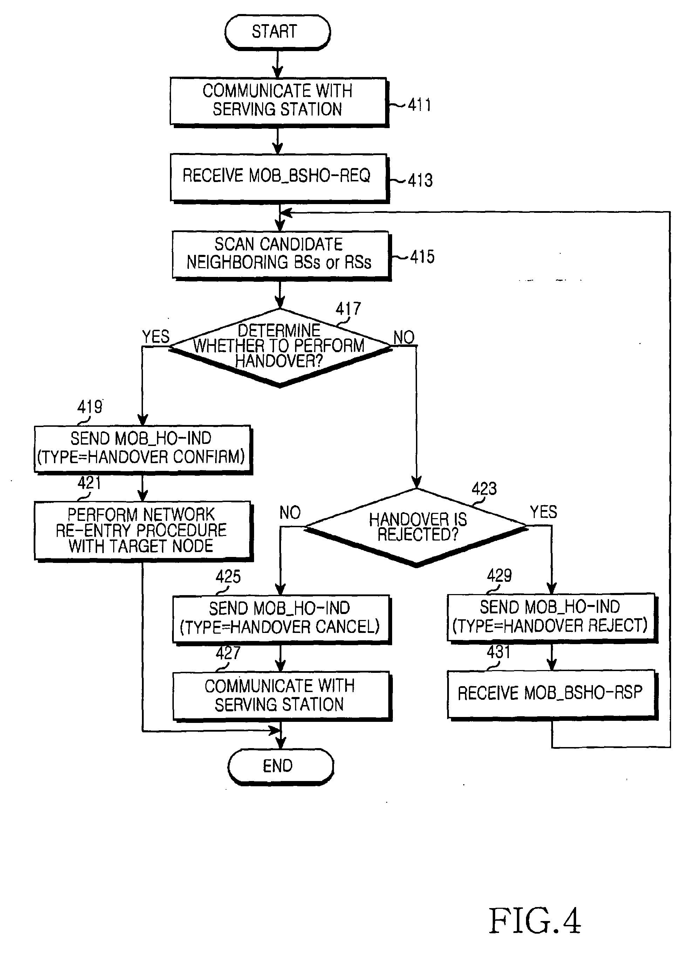

FIG. 4 is a flowchart for explaining an operation of an MS for processing a handover request from a serving station in a multi-hop relay BWA system according to the present invention. Here, the serving station can be a serving BS or a serving RS.

Referring to FIG. 4, in step 411, the MS communicates with the serving station. In step 413, the MS receives a handover request message from the serving station. The handover request message will be referred to as MOB_BSHO-REQ (BS Handover Request) message.

Table 1 below shows a MOB_BSHO-REQ message format.

**Table 1**

| Syntax | Size (bits) | Notes |
|---|---|---|
| MOB_BSHO_REQ Message() { | | |
| Management message type = TBD | 8 | To be determined |
| N_Candidate_Node | 8 | Number of recommended candidate nodes |
| For(i=0; i<N_Candidate_ Node; i++) { | | |
| Node ID | 48 | Candidate node Identifier (Node MAC address, etc.) |
| preamble index | 8 | |
| Available service level | 8 | Indicate the service level available at candidate node. |
| } | | |
| } | | |

Referring to Table 1, the MOB_BSHO-REQ message includes a plurality of Information Elements (IEs) such as a Management Message Type for identifying the MOB_BSHO-REQ message, an N_Candidate_Node for indicating the number of candidate nodes recommended by the serving station as a target node, and information about the candidate nodes. The candidate node information provides information about each candidate node, such as a Node ID, a preamble index, and an Available service level that can be provided to the MS when the MS is handed over to the candidate node. The candidate nodes may include a BS of a neighboring cell (neighboring cell BS), an RS of a neighboring cell (neighboring cell RS), a serving BS, and a neighboring RS of a serving cell. When the MS wants to be handed over, the MOB_BSHO-REQ message may include information about a forced handover.

After receiving the MOB_BSHO-REQ message, if necessary, the MS can perform scanning to measure signal strengths of the candidate nodes listed in the MOB_BSHO-REQ message in step 415. The MS can select an optimal target node to which the MS can be handed over through the scanning of the candidate nodes. In step 417, the MS determines whether to perform a handover to one of the candidate nodes. The determination can be made based on, for example, the signal strengths of the candidate nodes.

If the MS determines to perform a handover, the MS sends a handover indication (hereinafter, referred to as an MOB_HO-IND) message to the serving station in step 419.

Table 2 below shows a MOB_HO-IND message format.

**Table 2**

| Syntax | Size (bits) | Notes |
|---|---|---|
| MOB_HO-ND_Message() { | | |
| Management message type = TBD | 8 | To be determined |
| HO_IND_Type | 2 | 00: Handover confirm |
| | | 01: Handover cancel |
| | | 10: Handover reject |
| | | 11: reserved; shall be set to zero |
| | | (note: if this filed is not set to '00', the rest fields in this message shall be ignored.) |
| Reserved | 6 | Shall be set to zero |
| Target Node ID | 48 | Target node Identifier (Node MAC address, etc.) |
| Preamble index | 8 | The PHY specific preamble for the target node |
| } | | |

Referring to Table 2, the MOB_HO-IND message includes a plurality of IEs, such as a Management Message Type for identifying the MOB_HO-IND message, an HO_IND_Type (Handover Indication Type), a Target Node ID to which the MS to be handed over, and a Preamble index of the target node. The HO_IND_Type is set to one of the following indicators: a Handover confirm indicator indicating that the MS will perform a handover; a Handover cancel indicator indicating that the MS will continue communicating with the serving station without performing a handover; or a Handover reject indicator indicating that the MS requests the serving station to resend candidate node information when the MS cannot find a proper target node to which the MS is to hand over to. Other HO_IND_Type indicators are contemplated. When the HO_IND_Type is not set to the Handover confirm indicator, the remaining fields below the HO_IND_Type field can be ignored.

After sending to the serving station the MOB_HO-IND message, in which the HO_IND_Type is set to the Handover confirm indicator, the MS goes to step 421 so as to perform a network re-entry procedure to communicate with the selected target node.

If the MS determines not to perform a handover in step 417, the MS goes to step 423 where it is determined whether the handover is canceled or rejected. If the handover is canceled, the MS proceeds to step 425 where the MS sends a MOB_HO-IND message in which an HO_IND_Type is set to a Handover cancel indicator to the serving station. Then, the MS continues communicating with the serving station in step 427.

In step 423, if it is determined that the handover is rejected, the MS goes to step 429 where the MS sends a MOB_HO-IND in which an HO_IND_Type is set to a Handover reject indicator to the serving station. Then, the MS proceeds to step 431. In step 431, the MS receives a handover response message including a new candidate node list from the serving station. The handover response message will be referred to as a MOB_BSHO-RSP message. If necessary, the MS returns to step 415 to scan new candidate nodes in the list.

Table 3 below shows a MOB_BSHO-RSP format.

**Table 3**

| Syntax | Size (bits) | Notes |
|---|---|---|
| MOB_BSHO-RSP_Message() { | | |
| Management message type = TBD | 8 | To be determined |
| N_Candidate_Node | 8 | Number of recommended candidate nodes |
| For(i=0; i<N_Candidate_Node; i++) { | | |
| Node ID | 48 | Candidate node Identifier (Node MAC address, etc.) |
| preamble index | 8 | |
| Available service level | 8 | Indicate the service level available at candidate node. |
| } | | |
| } | | |

Referring to Table 3, the MOB_BSHO-RSP message includes a plurality of IEs, such as a Management message type for identifying the MOB_BSHO-RSP message, an N_Candidate_Node for indicating the number of candidate nodes recommended by the serving station, and information about the candidate nodes. The candidate node information is provided for each candidate node. The candidate node information provides information about each candidate node, such as a Node ID, a preamble index, and an Available service level that can be provided to the MS when the MS is handed over to the candidate node. The candidate nodes may include a neighboring cell BS, a neighboring cell RS, a serving BS, and a neighboring RS of a serving cell. When an MS wants to be handed over, the MOB_BSHO-RSP message may include a field indicating a forced handover.

When the MOB_BSHO-REQ message received in step 413 or the MOB_BSHO-RSP massage received in step 431 includes information about a forced handover request, the MS always performs a handover to a neighboring node selected from the candidate node list included in the received message or another proper neighboring node.

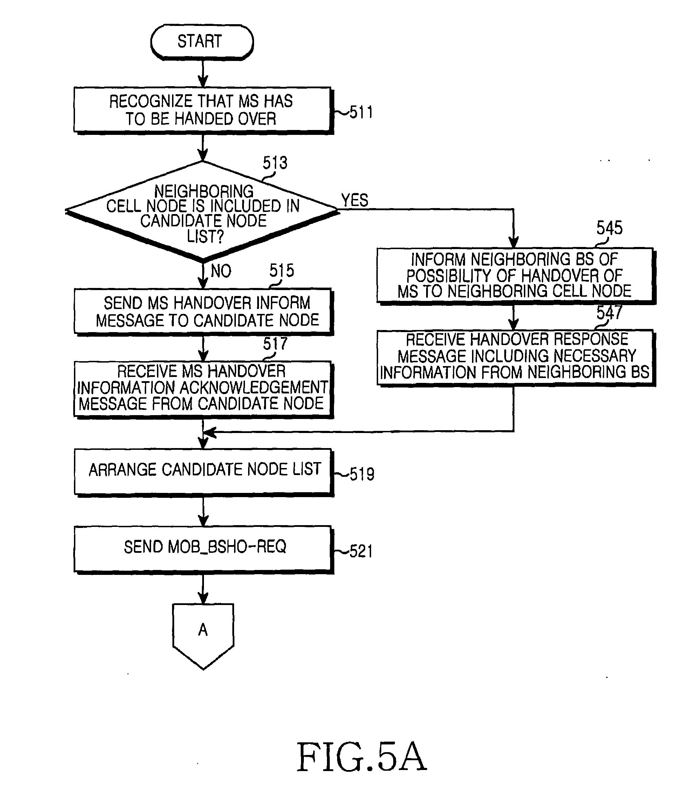

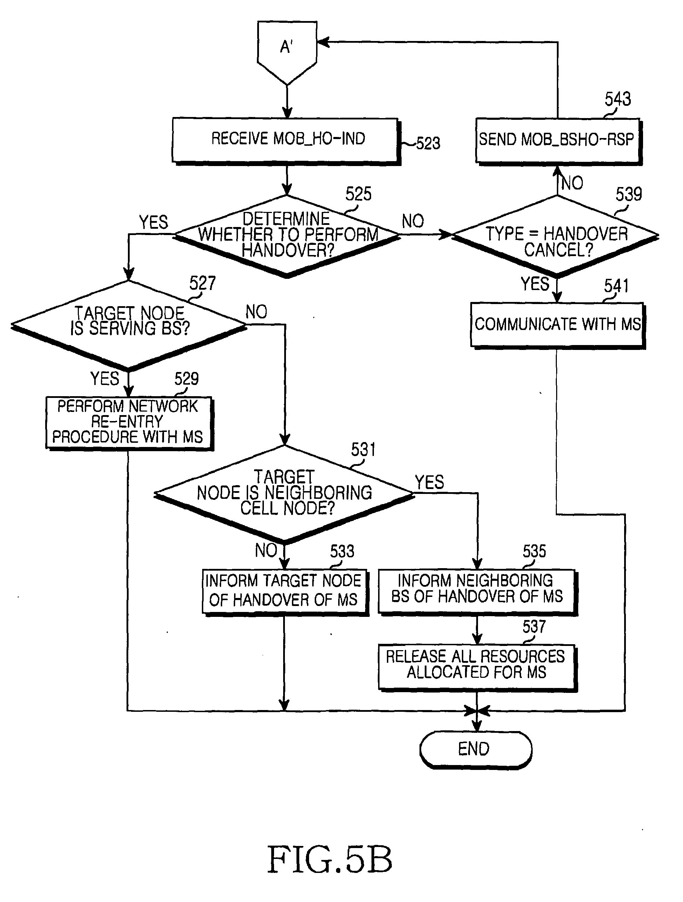

FIGs. 5A and B is a flowchart for explaining an operation of a serving BS for requesting an MS to perform a handover in a multi-hop relay BWA system according to the present invention.

Referring to FIGs. 5A and B, in step 511, the serving BS recognizes that an MS directly communicating with or managed by the BS is required to be handed over. For example, when the load on the serving BS is excessive, the serving BS can determine a handover of an MS. The serving BS hands over the MS to a node of a neighboring cell (neighboring cell node) in order to distribute the load on a serving cell (load balancing). Besides, when RS configuration/arrangement is changed, the serving BS can determine a handover of an MS. Further, the serving BS can determine a handover of an MS based on scanning results from an MS.

When it is required for an MS to be handed over, the serving BS goes to step 513. In step 513, the serving BS determines if a neighboring cell node is included in a candidate node list to be sent to the MS. The serving BS can prepare the candidate node list based on neighboring node scanning results from the MS, and determine that the candidate node list includes a neighboring cell node. The neighboring cell node includes a neighboring cell BS and a neighboring cell RS.

If the candidate node list includes a neighboring cell node, the serving BS goes to step 545. In step 545, the serving BS sends a Handover request (HO-request) message to a neighboring cell BS managing the neighboring cell node through a backbone network to inform the neighboring cell BS that the MS can be handed over to the neighboring cell BS.

Table 4 below shows an HO-request message format.

**Table 4**

| Syntax | Size (bits) | Notes |
|---|---|---|
| HO_request_Message() { | | |
| Global header | Variable | Backbone message header |
| For(i=0; i<Num Records; i++){ | | |
| MS ID | 48 | MS Identifier (MS MAC address, etc.) |
| Required bandwidth | 8 | Bandwidth which is required by MS (to guarantee minimum packet data transmission) |
| Required service level | 8 | |
| N_Candidate_Node | 8 | Number of candidate nodes in this neighbor BS The candidate nodes can include the neighbor base station. |
| For(j=0; j<N Candidate_Node; j++) { | | |
| Node ID | 48 | Candidate node Identifier (Node MAC address, etc.) |
| } | | |
| } | | |
| } | | |

Referring to Table 4, the HO-request message includes a plurality of IEs, such as a Global header indicating that the HO-request message is a backbone message, an MS_ID of an MS to be handed over, a bandwidth required by the MS to be handed over to a neighboring cell node, a service level required by the MS to be handed over to the neighboring cell node, an N_Canidate_Node indicating the number of neighboring cell nodes to which the MS can be handed over, and a Node ID of each neighboring cell node. The neighboring cell nodes may include the neighboring cell BS that receives the HO-request message from the serving BS, and a neighboring RS managed by the neighboring cell BS.

Table 5 below shows a format of a Global header included in a backbone message, such as the HO-request message shown in Table 4, which is transmitted through a backbone network.

**Table 5**

| Field | Size (bits) | Notes |
|---|---|---|
| Message type = TBD | 8 | To be determined |
| Sender BS ID | 48 | Sender base station identifier |
| Target BS ID | 48 | Target base station identifier |
| Time Stamp | 32 | Number of milliseconds since midnight GMT (set to 0xffffffff to ignore) |
| Num Records | 16 | Number of MS identity records |

Referring to Table 5, the Global header of a backbone message includes a plurality of IEs, such as a Message type for identifying the global header, a Sender BS ID of a BS sending the Global header, a Target BS ID receiving the Global header, a Time Stamp of the Global header, and a Num Records indicating the number of MS information records included in the Global header.

After sending the HO-request message to the neighboring cell BS, the serving BS receives a Handover Response (HO-response) message from the neighboring cell BS in step 547.

Table 6 below shows an HO-response format.

**Table 6**

| Syntax | Size (bits) | Notes |
|---|---|---|
| HO_response_Message() { | | |
| Global header | Variable | Backbone message header |
| For(i=0; i<Num Records; i++) { | | |
| MS_ID | 48 | MS Identifier (MS MAC address, etc.) |
| N_Candidate_Node | 8 | Number of candidate nodes in this neighbor BS. |
| | | The candidate nodes can include the neighbor BS. |
| For(j=0; j<N_Candidate_Node; j++) { | | |
| Node ID | 48 | Candidate node Identifier (Node MAC address, etc.) |
| Estimated bandwidth | 8 | Bandwidth which is provided by this node to guarantee minimum packet data transmission |
| Estimated service level | 8 | Service level which is provided by this node |
| } | | |
| } | | |
| } | | |

Referring to Table 6, the HO-response message includes a plurality of IEs, such as a Global header indicating that the HO-response message is a backbone message, an MS_ID of an MS requested to be handed over to a neighboring cell node, an N_Candidate_Node indicating the number of neighboring cell nodes to which the MS can be handed over, and information about each neighboring cell node. The neighboring cell node information can includes a Node ID of a neighboring cell node, an Estimated Bandwidth that can be allocated for the MS by the neighboring cell node, and an Estimated service level of the neighboring cell node that can be provided for the MS. The neighboring cell nodes may include a neighboring cell BS and a neighboring cell RS managed by the neighboring cell BS.

In step 515, the serving BS sends a Mobile Station Handover Inform (MSHO-INFORM) message to the serving cell nodes in the candidate node list.

Table 5 below shows an MSHO-INFORM message format.

**Table 7**

| Syntax | Size (bits) | Notes |
|---|---|---|
| MSHO-INFORM_Message() { | | |
| Management message type = TBD | 8 | To be determined |
| MS ID | 48 | MS Identifier (MS MAC address, etc.) |
| Required bandwidth | 8 | Bandwidth which is required by MS (to guarantee minimum packet data transmission) |
| Required service level | 8 | |
| } | | |

Referring to Table 7, the MSHO-INFORM message includes a plurality of IEs, such as a Management message type for identifying the MSHO-INFORM message, an MS ID of an MS to be handed over, a bandwidth required by the MS to be handed over, and a service level required by the MS to be handed over.

After sending the MSHO_INFORM message to the serving cell nodes, the serving BS goes to step 517. In step 517, the serving BS receives a Mobile Station Handover Information Acknowledgement (MSHO-INFORM-ACK) message from each corresponding serving cell node.

Table 8 below shows an MSHO-INFORM-ACK message format.

**Table 8**

| Syntax | Size (bits) | Notes |
|---|---|---|
| MSHO-INFORM-ACK_Message() { | | |
| Management message type = TBD | 8 | To be determined |
| MS ID | 48 | MS Identifier (MS MAC address, etc.) |
| Estimated bandwidth | 8 | Bandwidth which is provided by the target node to guarantee minimum packet data transmission |
| Estimated service level | 8 | Service level which is provided by the target node |
| } | | |

Referring to Table 8, the MSHO-INFORM-ACK message includes a plurality of IEs, such as a Management Message Type for identifying the MSHO-INFORM-ACK message, an MS ID of an MS to be handed over, an Estimated bandwidth that can be allocated for the MS, and an Estimated service level that can be provided for the MS.

In this way, the serving BS obtains information about the serving cell nodes and the neighboring cell nodes for performing a handover. In step 519, the serving BS arranges the candidate node list with reference to the handover related information received from the serving cell nodes and information about the neighboring cell nodes received from the neighboring cell BS. In step 521, the serving cell BS sends to the MS a MOB_BSHO-REQ message (defined in Table 1) including the arranged candidate node list. In case where the MS directly communicates with the serving BS, the MOB_BSHO-REQ message is directly sent to the MS from the serving BS. When the MS does not directly communicate with the serving BS, the MOB_BSHO-REQ message is sent to the MS from the serving BS via an RS. In the latter case, the MOB_BSHO-REQ message includes ID encoding information of the MS.

Table 9 below shows an MS ID encoding information format.

**Table 9**

| Name | Type | Length (bytes) | Value |
|---|---|---|---|
| MS ID | TBD | 2 or 6 | MS Identifier (MAC address, Basic CID, etc.) |

Referring to Table 9, the MS ID encoding information provides information about encoding name (MS ID), encoding type (TBD, to be determined), encoding length (2 or 6 bytes), and encoding value. The encoding value is ID information of the MS for which the MOB_BSHO-REQ message is destined. For example, the encoding value includes identification information of the MS such as a basic Connection Identifier (CID) or a Medium Access Control Address.

After sending the MOB_BSHO-REQ message, the serving BS goes to step 523. In step 523, the serving BS receives a MOB_HO-IND message (refer to Table 2) from the MS. The MOB_HO-IND message provides information about whether the MS has confirmed the handover request. If the MS communicates with the serving BS via an RS, the MOB_HO-IND message from the MS includes MS ID encoding information as shown in Table 9.

After receiving the MOB_HO-IND message, the serving BS goes to step 525. In step 525, the serving BS determines if an HO_IND_Type of the MOB_HO-IND message is set to a Handover confirm indicator. If so, the serving BS goes to step 527 where it is determined if a Target Node ID of the MOB_HO-IND message is set to the serving BS. If so, the serving BS goes to step 529 where the serving BS performs a network re-entry procedure together with the MS.

If the Target Node ID is not set to the serving BS, the serving BS goes to step 531 where the serving BS determines if the Target Node ID is set to a neighboring cell node. If not (e.g., if the Target Node ID is a serving cell RS), the serving BS goes to step 533 where the serving BS sends a Handover Notification (HO-notify) message to the serving cell RS so as to inform that the MS will be handed over to the serving cell RS.

Table 10 below shows an HO-notify message format.

**Table 10**

| Syntax | Size (bits) | Notes |
|---|---|---|
| HO-notify_Message() { | | |
| Management message type = TBD | 8 | To be determined |
| MS_ID | 48 | MS Identifier (Node MAC address, etc.) |
| } | | |

Referring to Table 10, the HO-notify message includes a plurality of IEs, such as a Management message type for identifying the HO-notify message and a Node_ID of an MS that will be handed over to a target node receiving the HO-notify message. The HO-notify message may further include information about a bandwidth and a service level that can be provided for the MS by the target node when the MS is handed over to the target node.

If the serving BS determines that the Target Node ID is set to a neighboring cell node in step 531, the serving BS goes to step 535. In step 535, the serving BS sends a Handover confirm (HO-confirm) message through a backbone network to a neighboring BS managing the neighboring cell node.

Table 11 below shows an HO-confirm message format.

**Table 11**

| Syntax | Size (bits) | Notes |
|---|---|---|
| HO_confirm_Message() { | | |
| Global header | Variable | Backbone message header |
| For(i=0; i<Num Records; i++) { | | |
| MS ID | 48 | MS Identifier (MS MAC address, etc.) |
| Target Node ID | 48 | Target node Identifier (Node MAC address, etc.) |
| Estimated bandwidth | 8 | Bandwidth which is provided by the target |
| | | node to guarantee minimum packet data transmission |
| Estimated service level | 8 | Service level which is provided by the target node |
| } | | |
| } | | |

Referring to Table 11, the HO-confirm message includes a plurality of IEs, such as a Global header indicating that the HO-confirm message is a backbone message, an MS_ID of an MS to be handed over, a Target Node ID of a neighboring cell target node to which the MS is handed over, and an Estimated bandwidth and an Estimated service level that can be provided for the MS by the target node when the MS is handed over to the target node. The target node may be a neighboring cell BS or a neighboring cell RS managed by the neighboring cell BS. Further, the Estimated bandwidth and service level are set to the same values as the Estimated bandwidth and service level in the HO-response message (defined in Table 6).

After step 535, the serving BS proceeds to step 537 where the serving BS releases all resources allocated for the MS to disconnect the MS.

If the HO_IND_Type of the MOB_HO-IND message is set to a Handover cancel indicator, the serving BS goes to step 541 where the serving BS continues communicating with the MS. Here, the serving BS directly communicates with the MS or indirectly communicates with the MS via an RS.

If the HO_IND_Type of the MOB_HO-IND message is set to a Handover reject indicator, the serving BS goes to step 543. In step 543, the serving BS reconstructs the candidate node list for a handover of the MS and sends a MOB_BSHO-RSP (defined in Table 3) including the reconstructed candidate node list to the MS. The serving BS can repeat steps 545, 547, and 519 or steps 515, 517, and 519 to reconstruct the candidate node list.

Although not shown in FIGs. 5A and B, when the MS surely wants to be handed over to a neighboring node recommended by the serving BS or other neighboring nodes without fail, the serving BS can add information indicating a forced handover to a message destined for the MS. When it is required for the MS to be forcibly handed over, the serving BS adds information indicating a forced handover to the MOB_BSHO-REQ message (defined in Table 1) or the MOB_BSHO-RSP message (defined in Table 3) and sends the message to the MS.

Meanwhile, when the MS communicates with the serving BS via an RS, the MOB_BSHO-REQ message (defined in Table 1) sent from the serving BS to the MS in step 521 to request a handover includes MS ID encoding information (defined in Table 9). Alternatively, the MOB_BSHO-REQ message can have a different format including an ID of the MS and MS handover related information. Further, when the MS communicates with the serving BS via an RS, the MOB_BSHO-RSP message (defined in Table 3) sent from the serving BS to the MS in step 543 includes MS ID encoding information (refer to Table 9). Alternatively, the MOB_BSHO-RSP message can have a different format including an ID of the MS and MS handover related information. Furthermore, when the serving BS receives the MOB_HO-IND message (defined in Table 2) via an RS in step 523, the MOB_HO-IND message includes MS ID encoding information (defined in Table 9). Alternatively, the MOB_HO-IND message can have a different format including an ID of the MS and MS handover related information.

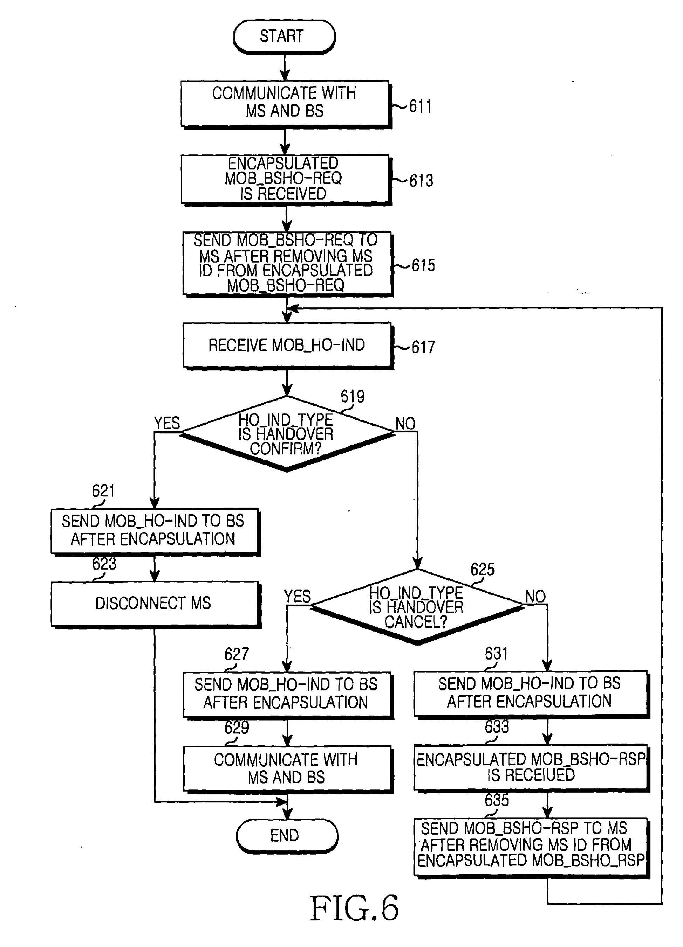

FIG. 6 is a flowchart for explaining an operation of a serving RS for processing a handover request from a serving BS in a multi-hop relay BWA system according to the present invention.

Referring to FIG. 6, in step 611, the serving RS conveys information between the serving BS and an MS. In step 613, an MOB_BSHO-REQ message (defined in Table 1), requesting an MS handover, is received from the serving BS.

In step 615, the serving RS removes MS ID encoding information (defined in Table 9) encapsulated in the MOB_BSHO-REQ message and sends the MOB_BSHO-REQ message to the MS. In step 617, the serving RS receives a response (an MOB_HO-IND message as shown in Table 3) from the MS.

After that, in step 619, the serving RS determines if an HO_IND_Type of the MOB_HO-IND message is set to a Handover confirm indicator. If so, the serving RS encapsulates the MS ID encoding information into the MOB_HO-IND message received from the MS and then sends the MOB_HO-IND message to the serving BS in step 621. In step 623, the serving RS disconnects the MS.

In step 625, it is determined if the HO_IND_Type of the MOB_HO-IND message is set to a Handover cancel indicator. If the HO_IND_Type of the MOB_HO-IND message is set to a Handover cancel indicator, the serving RS encapsulates the MS ID encoding information into the MOB_HO-IND message received from the MS and then sends the MOB_HO-IND message to the serving BS in step 627. In step 629, the serving RS continues to relay information between the serving BS and the MS.

If it the HO_IND_Type of the MOB_HO-IND message is set to a Handover reject indicator, the serving RS encapsulates the MS ID encoding information into the MOB_HO-IND message received from the MS and then sends the MOB_HO-IND message to the serving BS in step 631. Since the Handover reject indicator means that the MS cannot find a proper neighboring node for a handover, the serving RS receives an MOB_BSHO-RSP message including a re-constructed candidate node list and MS ID encoding information from the serving BS in step 633. In step 635, the serving RS deletes the MS ID encoding information from the MOB_BSHO-RSP message and sends the MOB_BSHO-RSP message to the MS.

The MOB_BSHO-REQ message (defined in Table 1) sent from the serving BS to the serving RS in step 613 includes the MS ID encoding information as shown in Table 9. Alternatively, the MOB_BSHO-REQ message can have a different format including an ID of the MS and MS handover related information. The MOB_BSHO-RSP message (defined in Table 3) sent from the serving BS to the RS in step 633 includes the MS ID encoding information as shown in Table 9. Alternatively, the MOB_BSHO-RSP message can have a different format including an ID of the MS and MS handover related information. The MOB_HO-IND message (defined in Table 2) sent from the serving RS to the serving BS in steps 621, 627, and 631 includes the MS ID encoding information as shown in Table 9. Alternatively, the MOB_HO-IND message can have a different format including an ID of the MS and MS handover related information.

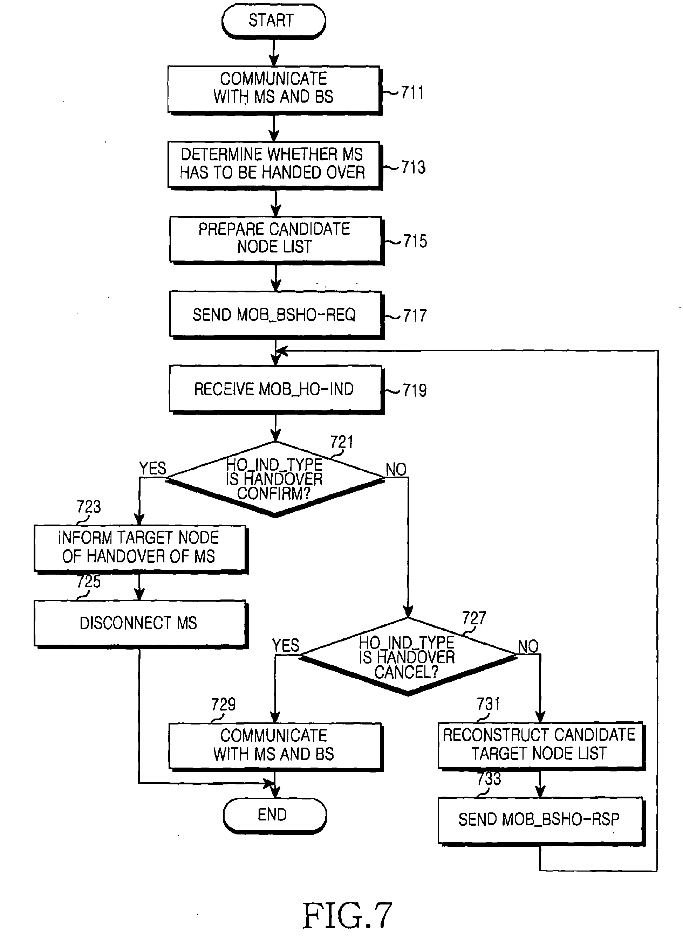

In the embodiments of FIGs. 5A, 5B and 6, the serving BS prepares the MOB_BSHO-REQ message. However, the serving RS can prepare the MOB_BSHO-REQ message. This case will now be described with reference to FIGs. 7 through 9 according to the present invention.

FIG. 7 is a flowchart for explaining an operation of a serving RS for requesting an MS to perform a handover in a multi-hop relay BWA system according to the present invention.

Referring to FIG. 7, in step 711, the serving RS relays information between the MS and a serving BS. In step 713, the serving RS recognizes that the MS has to be handed over. The serving RS can determine that the MS needs a handover or can be informed of the need of the MS handover from the serving BS. For example, the serving BS can order the serving RS to hand over the MS to a neighboring cell node for inter-cell load balancing. When the configuration/arrangement of RSs is changed, the serving BS can order the serving RS to hand over the MS. The serving BS can also order the serving RS to hand over the MS based on scanning results reported by the MS.

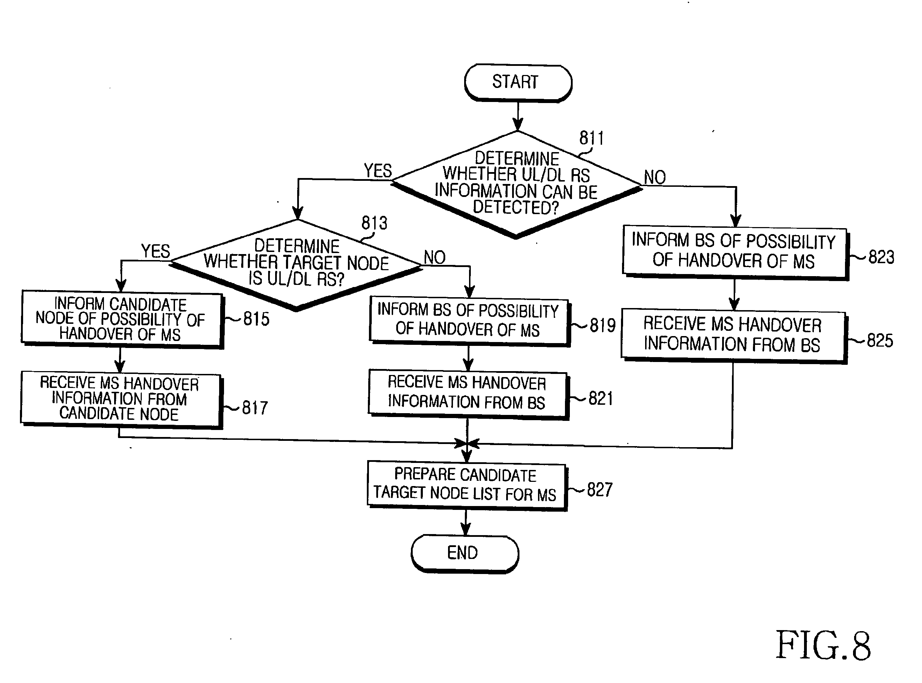

After the serving RS recognizes that the MS needs to be handed over, the serving RS proceeds to step 715 where the serving RS prepares a candidate node list for the MS. In step 717, the serving RS generates a MOB_BSHO-REQ message (defined in Table 1) including the candidate node list and sends the message to the MS. Procedures of the serving RS for preparing the candidate node list will be described later in detail with reference to FIG. 8.

After sending the MOB_BSHO-REQ message, the serving RS receives an MOB_HO-IND message (defined in Table 2) from the MS as a response to the MOB_BSHO-REQ message in step 719. In step 721, the serving RS examines an HO_IND_Type of the MOB_HO-IND message.

In step 721, it is determined if the HO_IND_Type of the MOB_HO-IND message is set to a Handover confirm indicator. If the HO_IND_Type of the MOB_HO-IND message is set to a Handover confirm indicator, the serving RS proceeds to step 723 where the serving RS informs a target node included in the MOB_HO-IND message that the MS will be handed over to the target node. To inform the target node of the MS handover, the serving RS can directly send an HO-notify message (defined in Table 10) to the target node. Alternatively, the serving RS can encapsulate ID information of the MS into the received MOB_HO-IND message and send the MOB_HO-IND message to the serving BS in order to inform the target node of the MS handover. Instead of sending the MOB_HO-IND message to the serving BS, the serving RS can sends another message including information about the ID and handover of the MS to the serving BS. The serving RS release all resources allocated to the MS to disconnect the MS in step 725.

In step 727, the serving RS determines if the HO_IND_Type of the MOB_HO-IND message is set to a Handover cancel indicator. If so, the serving RS continues to relay information between the serving BS and the MS in step 729. To inform the serving BS of the Handover cancel, the serving RS can encapsulate the ID information of the MS into the MOB_HO-IND message received from the MS and then send the message to the serving BS. Alternatively, instead of sending the MOB_HO-IND message, the serving RS can send another message including information about the ID and handover of the MS to the serving BS.

If the HO_IND_Type of the MOB_HO-IND message is set to a Handover reject indicator, the serving RS goes to step 731. In step 731, the serving RS reconstructs the candidate node list for the MS. In step 733, the serving RS sends a MOB_BSHO-RSP (defined in Table 3) including the reconstructed candidate node list to the MS. Procedures of the serving RS for reconstructing the candidate node list will be described later in detail with reference to FIG. 8.

Although not shown in FIG. 7, when the MS want to be handed over to a neighboring node recommended by the serving RS or other neighboring nodes, the serving RS can add a forced handover indicator into a message destined for the MS. When a forced handover is required, the serving RS can add a forced handover indicator to a message such as the MOB_BSHO-REQ message (refer to Table 1) or the MOB_BSHO-RSP message (refer to Table 3). Then the serving RS can send the message to the MS.

FIG. 8 is a flowchart for explaining an operation of an RS for preparing a candidate node list to support a handover of an MS in a multi-hop relay BWA system according to the present invention. In FIG. 8, detail procedures of steps 715 and 731 in FIG. 7 are illustrated.

Referring to FIG. 8, in step 811, the serving RS determines whether up link (UL) RSs and down link (DL) RSs can be detected. The UL RSs are upper layer RSs located between the serving RS and a serving BS for data relay, and the DL RSs are lower layer RSs directly receiving data from the serving RS.

If the UL and DL RSs can be detected, the serving RS proceeds to step 813. In step 813, the serving RS determines if a candidate node to which the MS can be handed over is included in the UL and DL RSs. The serving RS can perform the step 813 with reference to scanning results reported by the MS. If a candidate node is included in the UL and DL RSs, the serving RS goes to step 815. In step 815, the serving RS sends an MSHO-INFORM message (refer to Table 7) to the candidate node so as to inform the candidate node of the possibility of handover of the MS. In step 817, the serving RS receives an MSHO-INFORM-ACK message (refer to Table 8) from the candidate node. Then, the serving RS proceeds to step 827.

If the serving RS can detect the UL and DL RSs, the serving RS can send a handover related control message directly to the candidate node without sending the message via the serving BS. Delay at the serving BS can be removed. The serving RS and the serving BS can recognize the UL and DL RSs using a predetermined method. Description of this recognition method will be omitted since it is not directly related to the present invention.

If a candidate node to which the MS can be handed over is not included in the UL and DL RSs, the serving RS proceeds to step 819. In step 819, the serving RS sends information regarding the possibility of handover of the MS to the serving BS so as to request the serving BS of handover related control information. The information sent from the serving RS to the serving BS may include information about candidate nodes recommend by the serving RS except for nodes corresponding to the UL/DL RSs. The serving RS goes to step 821 where the serving RS receives handover related information about candidate nodes from the serving BS. The serving RS proceeds to step 827.

If the serving RS determines that UL and DL RSs cannot be detected in step 811, the serving RS proceeds to step 823. In step 823, the serving RS sends a message including information about candidate nodes recommended by the serving RS to the serving BS. In step 825, the serving RS receives handover related control information about the candidate nodes from the serving BS. Then, the serving RS proceeds to step 827.

A Mobile Station Handover Information Request (MSHO-INFO-REQ) message, which can be transmitted from the serving RS to the serving BS in steps 819 and 823 in order for the serving RS to obtain handover related control information about candidate nodes, is shown in Table 12 below.

**Table 12**

| Syntax | Size (bits) | Notes |
|---|---|---|
| MSHO-INFO-REQ_Message() { | | |
| Management message type = TBD | 8 | To be determined |
| MS ID | 48 | MS Identifier (MS MAC address, etc.) |
| Required bandwidth | 8 | Bandwidth which is required by MS (to guarantee minimum packet data transmission) |
| Required service level | 8 | |
| N_Candidate_Node | 8 | Number of recommended candidate nodes |
| For(I=0; i<N_Candidate_Node; i++) { | | |
| Node ID | 48 | Candidate node Identifier (Node MAC address, etc.) |
| } | | |
| } | | |

Referring to Table 12, the MSHO-INFO-REQ message includes a plurality of IEs, such as a Management Message Type for identifying the MSHO-INFO-REQ message, an MS ID of an MS to be handed over, a Required bandwidth for a handover of the MS, a Required service level for the handover of the MS, an N_Candidate_Node indicating the number of candidate nodes recommended by the serving RS, and a Node ID of each candidate node.

A Mobile Station Handover Information Response (MSHO-INFO-RSP) message that can be transmitted from the serving BS to the serving RS in steps 821 and 825 is shown in Table 13 below.

**Table 13**

| Syntax | Size (bits) | Notes |
|---|---|---|
| MSHO-INFO-RSP_Message() { | | |
| Management message type = TBD | 8 | To be determined |
| MS ID | 48 | MS Identifier (MS MAC address, etc.) |
| N Candidate Node | 8 | Number of recommended candidate nodes |
| For(1=0; i<N_Candidate_Node; i++) { | | |
| Node ID | 48 | Candidate node Identifier (Node MAC address, etc.) |
| Estimated bandwidth | 8 | Bandwidth which is provided by the node to guarantee minimum packet data transmission |
| Estimated service level | 8 | Service level which is provided by the node |
| } | | |
| } | | |

Referring to Table 13, the MSHO-INFO-RSP message includes a plurality of IEs, such as a Management Message Type for identifying the MSHO-INFO-RSP message, an MS ID of an MS to be handed over, an N_Candidate_Node indicating the number of candidate nodes, and information about the candidate nodes. The candidate node information may include a Node ID of each candidate node, and an Estimated bandwidth and an Estimated service level that can be provided for the MS to be handed over.

After obtaining information about the candidate nodes in this way, the serving RS constructs a candidate node list for the MS in step 827.

In FIG. 8, the serving RS sends information about the possibility of the handover of the MS to the serving BS when a candidate node is not included in the UL/DL RSs. However, if the serving RS can directly communicate with an RS other than the UL/DL RSs, the serving RS can send the information about the possibility of the handover of the MS directly to the RS without sending the information via the serving BS.

The procedures of FIG. 8 may be performed when the serving RS recognizes that an arbitrarily MS needs to be handed over or when the serving RS receives an MOB_HO-IND message reporting that an MS cannot select a proper target node to which the MS is handed over.

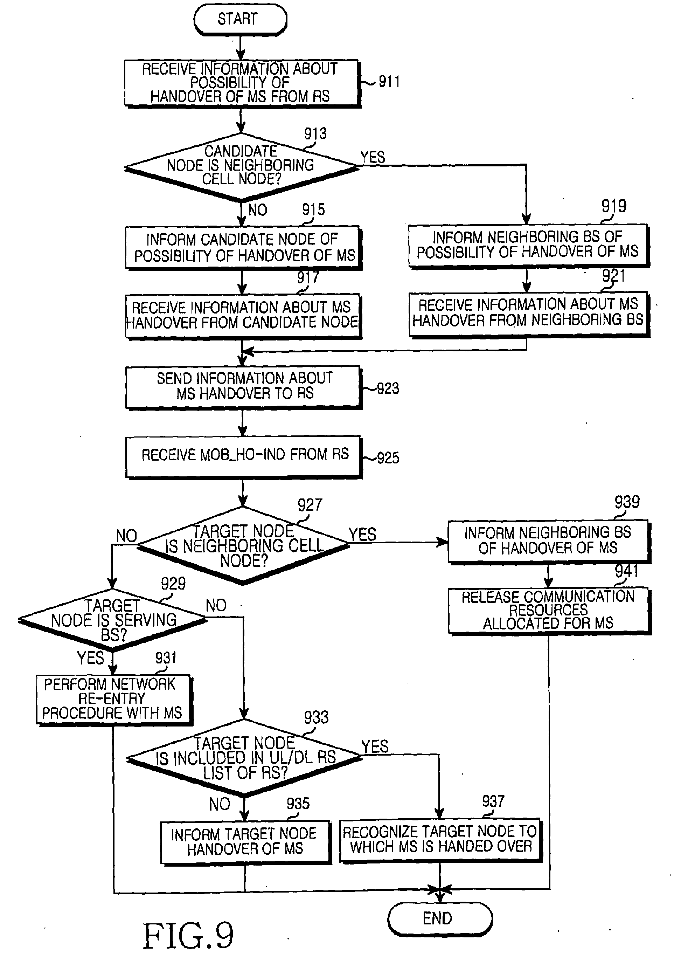

FIG. 9 is a flowchart for explaining an operation of a serving BS for processing a handover request from a serving RS in a multi-hop relay BWA system according to the present invention.

Referring to FIG. 9, in step 911, the serving BS is informed of the possibility of handover of an MS by receiving an MSHO-INFO-REQ message (defined in Table 12) from the serving RS. The MSHO-INFO-REQ message includes information about candidate nodes recommended by the serving RS.

In step 913, the serving BS determines whether a neighboring cell node is included in the candidate nodes listed in the MSHO-INFO-REQ message. "Neighboring cell node" is a term including a neighboring cell BS and a neighboring cell RS.

If a neighboring cell node is not included in the candidate nodes, the serving BS proceeds to step 915. In step 915, the serving BS sends an MSHO-INFORM message (defined in Table 7) to the candidate nodes to inform of the possibility of handover of the MS. In step 917, the serving BS receives an MSHO-INFORM-ACK message (defined in Table 8) including control information required for the handover of the MS from each of the candidate nodes. Then, the serving BS proceeds to step 923.

If a neighboring cell node is included in the candidate nodes, the serving BS goes to step 919. In step 919, the serving BS sends an HO-request message (defined in Table 4) to a neighboring cell BS managing the neighboring cell node through a backbone network so as to inform of the possibility of the handover of the MS. In step 921, the serving BS receives an HO-response message (defined in Table 6) from the neighboring cell BS. The serving BS goes to step 923.

In this way, the serving BS collects handover related information about the candidate nodes. In step 923, the serving BS generates an MSHO-INFO-RSP message (defined in Table 13) including the collected handover related information and sends the message to the serving RS. In step 925, the serving BS receives an MOB_HO-IND message (defined in Table 2) from the serving RS. The MOB_HO-IND message provides information about whether the handover of MS will be performed. The MOB_HO-IND message may includes an MS ID of the MS to be handed over. In the current embodiment, since the serving RS manages the handover of the MS, the MOB_HO-IND is sent to the serving BS only when the handover of the MS is confirmed. It is assumed that the MOB_HO-IND message sent to the serving BS has an HO_IND_Type set to a handover confirm indicator.

When the MOB_HO-IND message is received, the serving BS proceeds to step 927. In step 927, the serving BS determines if a handover target node included in the MOB_HO-IND message is a neighboring cell node. If not, the serving BS determines if the handover target node is the serving BS itself. If so, the serving BS goes to step 931 where the serving BS performs a network re-entry procedure with the MS.

If the handover target node is not the serving BS itself, the serving BS goes to step 933. In step 933, the serving BS determines if the target node is included in a UL/DL RS list of the serving RS. If not, the serving BS goes to step 935 where the serving BS sends an HO-notify message (refer to Table 10) to the target node to inform of the handover of the MS.

If the target node is included in the UL/DL RS list in step 933, the serving BS goes to step 937. In step 937, the serving BS records that the MS is handed over to the target node. The serving BS already knows the UL/DL RS list of the serving RS, and when the target node is included in the UL/DL RS list, the serving BS determines that the serving RS has sent the HO-notify message to the target node. Thus, the serving Bs performs no operation except for monitoring whether the MS is handed over. However, it is assumed that the serving RS cannot directly send the HO-notify message to the target node in the UL/DL RS list, but the serving BS should send the HO-notify message to the target node.

If it is determined that the target node is a neighboring cell node in step 927, the serving BS goes to step 939. In step 939, the serving BS sends an HO-confirm message (defined in Table 11) to a neighboring cell BS managing the neighboring cell node via a backbone network so as to inform of the handover of the MS. The neighboring cell node may be a neighboring cell BS or neighboring cell RS. The serving BS release all resources allocated for the MS so as to disconnect the MS in step 941 after the MS is handed over to the target node.

The process of FIG. 9 is preformed in the same way when the serving BS receives a message providing information about the possibility of handover of an MS from the serving RS or when the serving BS is requested by the serving RS to send information about a target node to which the MS is handed over in order for the serving RS to reconstruct a candidate node list.

In FIGs. 8 and 9, when the serving RS prepares a candidate node list for an handover of an MS, the serving RS requests the serving BS to construct the candidate node list or directly communicates with an RS included in the UP/DL RSs of the serving RS by sending/receiving messages shown in Table 7, 8, or 10. When the serving RS prepares the candidate node list, the serving RS can directly send/receive control messages to/from all RSs managed by the serving BS, the neighboring BS, and all RSs managed by the neighboring BS.

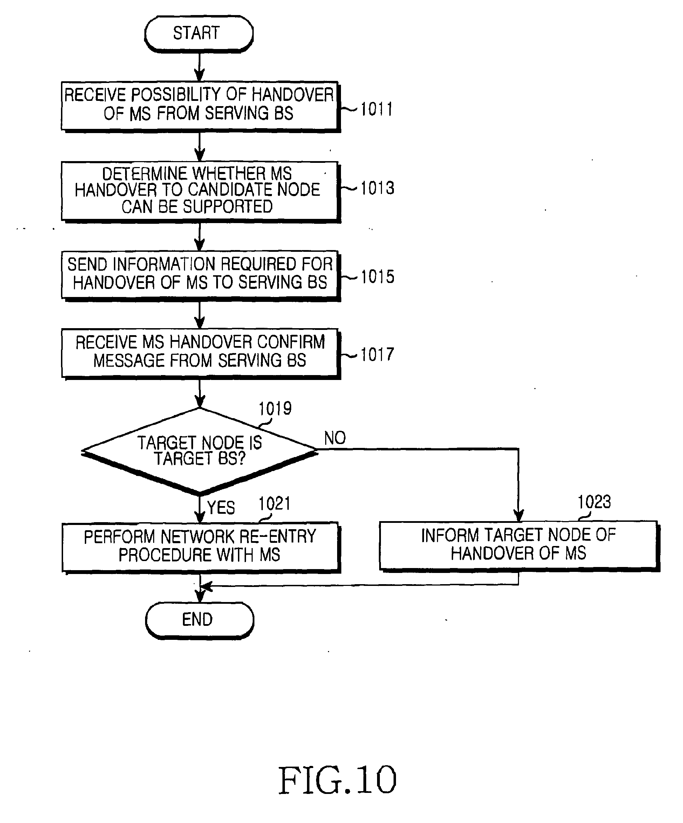

FIG. 10 is a flowchart for explaining an operation of a BS of a neighbor cell in a multi-hop relay BWA system according to the present invention. The neighboring cell BS can directly exchange information about a handover of an MS with a serving RS or a serving BS. In FIG. 10, the neighboring cell BS communicates with the serving BS, for example.

Referring to FIG. 10, in step 1011, the neighboring cell BS receives an HO-request message (defined in Table 4) providing information about the possibility of handover of an MS from a serving BS (or serving cell BS) of the MS. The HO-request message includes information about neighboring cell nodes to which the MS can be handed over.

In step 1013, the neighboring BS determines whether the handover of the MS to the candidate nodes included in the HO-request message can be supported. The determination can be performed based on a bandwidth and a service level requested by the MS through the HO-request message or other guidelines.

In step 1015, the neighboring cell BS sends an HO-response message (defined in Table 6) including control information required for the handover of the MS to the serving cell BS. The HO-response message includes information about a bandwidth and a service level that can be provided for the MS when the MS is handed over to a neighboring cell node managed by the neighboring cell BS. This information may be used when a target node to which the MS will be handed over is determined.

In step 1017, the neighboring cell BS receives an HO-confirm message (defined in Table 11) confirming the handover of the MS from the serving cell BS. At this time, the neighboring cell BS recognizes that the MS is determined to be handed over to a node managed by the neighboring cell BS. In step 1019, the neighboring cell BS determines if a target node included in the HO-confirm message is the neighboring cell BS itself.

If so, the neighboring cell BS performs a network re-entry procedure with the MS in step 1021. If it is determined that the target node is an RS managed by the neighboring cell BS, the neighboring cell BS goes to step 1023. In step 1023, the neighboring cell BS sends an HO-notify message (defined in Table 10) to the RS (target node) so as to inform of the handover of the MS.

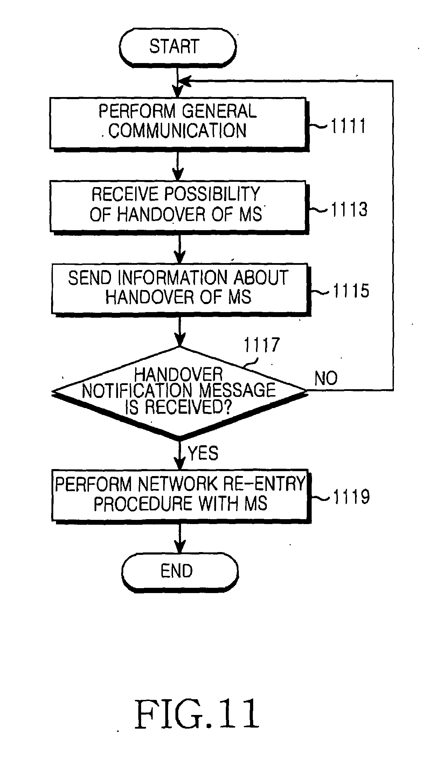

FIG. 11 is a flowchart for explaining an operation of an RS for receiving the possibility of a handover in a multi-hop relay BWA system according to the present invention. The RS may be located in a serving cell where an MS to be handed over is located or in a neighboring cell.

Referring to FIG. 11, in step 1111, the RS is in a general communication state. In step 1113, the RS receives an MSHO-INFORM message (defined in Table 7) providing information about the possibility of handover of an MS from its serving station. The serving station may be a BS or another RS. The serving station (node) may be a serving BS or RS of the MS that handles the handover the MS. When the RS is a neighboring cell node, the serving station may a neighboring cell BS managing a neighboring cell of the MS.

In step 1115, the RS determines if the handover of the MS can be accepted based on the information contained in the MSHO-INFORM message, and then the RS sends an MSHO-INFORM-ACK (defined in Table 8) message including control information regarding the handover of the MS to the serving station. The serving BS or RS of the MS uses the control information regarding the handover of the MS to prepare a candidate node list for the handover of the MS.

In step 1117, the RS determines if an HO-notify (refer to Table 10) message informing of the handover of the MS is received. If so, the RS performs a network re-entry procedure with the MS in step 1119. The RS operates as a serving station of the MS.

In FIG. 11, although the RS receives information regarding the handover of the MS from its BS, the RS can receive the information directly from a serving RS of the MS.

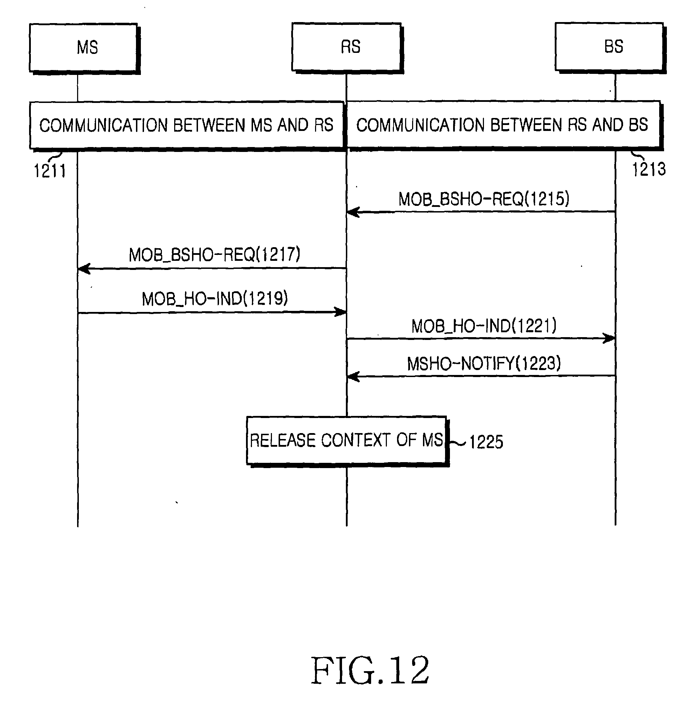

FIG. 12 is a diagram illustrating handover signal flows among an MS, a BS, and an RS that simply forwards handover control information in a multi-hop relay BWA system according to the present invention.

Referring to FIG. 12, in step 1211, the MS communicates with the RS. In step 1213, the RS communicates with the BS. The RS relays control messages and data between the MS and the BS as a serving station of the MS. The RS simply forwards such messages between the MS and RS.

In step 1215, the BS recognizes that the MS has to be handed over and sends a MOB_BSHO-REQ message toward the MS to request a handover. In step 1217, the RS forwards the MOB_BSHO-REQ message received from the BS to the MS. In step 1219, the MS sends a MOB-HO-IND message as a response to the MOB_BSHO-REQ message. In step 1221, the RS forwards the MOB_HO-IND message to the BS.

When the MOB_HO-IND message from the MS informs that the MS confirms the handover request, the BS sends an MSHO-notify message to the RS to inform of the handover of the MS in step 1223. In step 1225, the RS recognizes the handover of the MS by receiving the MSHO-notify message and releases context information of the MS so as to terminate communication with the MS.

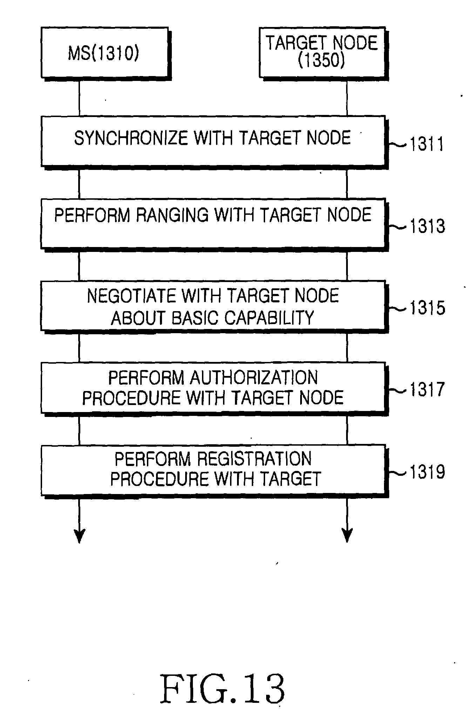

FIG. 13 is a diagram illustrating signal flows between an MS and a target node for a network re-entry in a multi-hop relay BWA system according to the present invention.

Referring to FIG. 13, in step 1311, an MS 1310 synchronizes with a target node 1350 by receiving a preamble from a target node 1350. In step 1313, the MS 1310 obtains information required for ranging by receiving Downlink Channel Descriptor (DCD), Uplink Channel descriptor (UCD), DL-MAP, and UL-MAP messages from the target node 1350 and performs a ranging process based on the obtained information.

For example, the ranging process can start with selecting an arbitrary code from a handover ranging code set of the UCD message that is allocated for the MS 1310 to be handed over and sending the selected code to the target node 1350 in a ranging opportunity period. When the target node 1350 recognizes the handover of the MS 1310 by receiving an MOB_HO-IND message (defined in Table 2), an HO-notify message (defined in Table 10), or an HO-confirm message (defined in Table 11), the target node 1350 can allocate the MS 1310 a separate UL ranging opportunity period and then start a ranging process with the MS 1310 when the MS 1310 sends a ranging request message or ranging code in the allocated UL ranging opportunity period. A method of constructing the handover ranging code set for the target node 1350 is not described since the method is not directly related to the present invention.

In step 1315, the MS 1310 and the target node 1350 perform a basic capability negotiation procedure. In step 1317, the MS 1310 and the target node 1350 perform an authorization procedure. When the target node 1350 is an RS, a BS managing the target node 1350 can be involved in the authorization procedure.

If necessary, the MS 1310 and the target node 1350 perform a registration procedure in step 1319. For example, when the target node 1350 is not a serving cell node, the MS 1310 registers with the target node 1350.

In the case where the MS 1310 is handed over within a serving cell (e.g., the MS 1310 is handed over between serving cell RSs or between a serving cell RS to a serving BS), all registration procedures of an initial connection process are not required since the MS 1310 has already registered with the serving BS. Instead, only some of the registration procedures such as CID updating may be required for maintaining communication.

When the MS 1310 is handed over to from the serving cell to a neighboring cell (i.e., from a serving cell node to a neighboring cell BS or RS), the MS 1310 and the target node 1350 perform registration procedures in an initial connection process. If the target node 1350 is not the neighboring cell BS, the neighboring cell BS can be involved in the registration procedures.

After the MS 1310 is handed over to the target node 1350, the MS 1310 and the target node 1350 perform a network re-entry process required for communication persistence and communicate with each other.

The network re-entry process described in FIG. 13 can be partially performed depending on the types of the target node 1350, such as a serving cell node, a neighboring cell node, a BS, or an RS. Furthermore, most procedures of the network re-entry process can be omitted for handover optimization or other reasons.

As described in the above embodiments, a BS determines the need for handover of an MS communicating through a relay service of an RS and transmits a handover request message MOB_BSHO-REQ (defined in Table 1) to the MS via the RS.

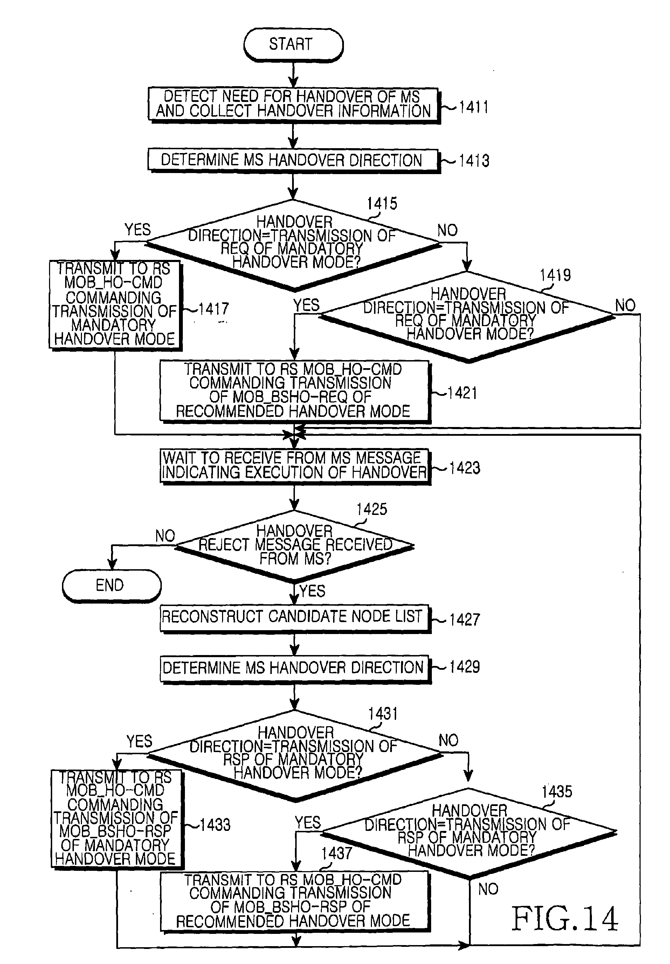

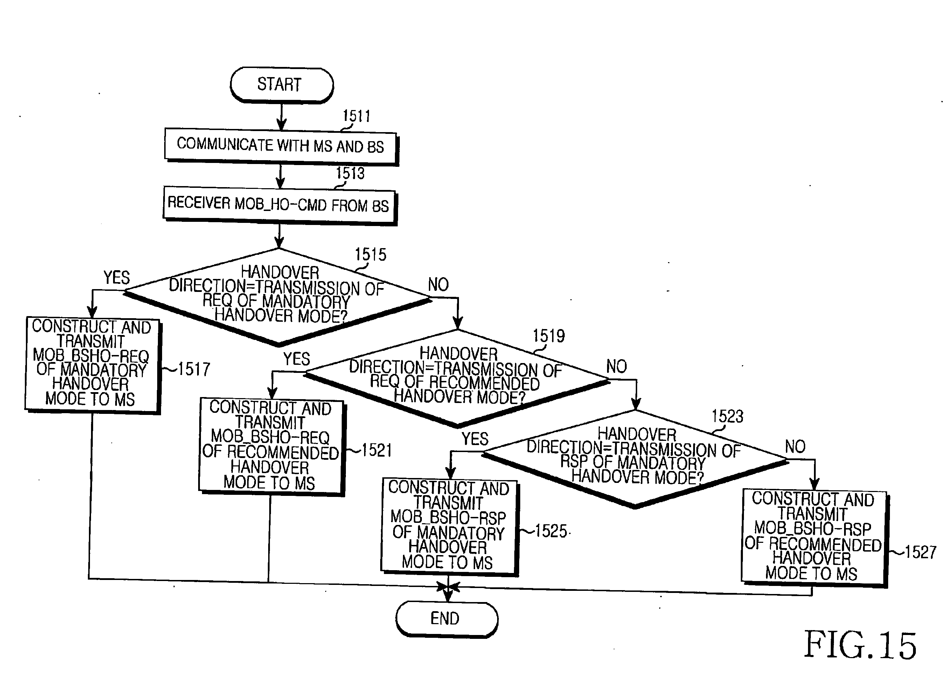

When the handover of the MS is necessary, the BS may collect information necessary for the handover of the MS from an RS or a neighboring BS that is a target node of the MS, provide the collected handover information to an RS communicating directly with the MS, and command the RS to construct and send the handover request message MOB_BSHO-REQ (defined in Table 1) to the MS. This RS-assisted handover procedure will be described in detail with reference to FIGs. 14 and 15.

FIG. 14 is a flowchart illustrating an operation of a BS for commanding an RS to send a handover request message to an MS in a multi-hop relay BWA system according to the present invention.

Referring to FIG. 14, in step 1411, a BS detects the need for handover of an MS and collects information necessary for the handover of the MS. The information necessary for the handover of the MS corresponds to handover supporting information of a neighboring BS and a neighboring RS, which will be included in the MOB_BSHO-REQ message defined in Table 1, and can be obtained by exchange of the HO_resquest message defined in Table 4, the HO_response message defined in Table 6, the MSHO-INFORM message defined in Table 7 and the MSHO-INFORM-ACK message defined in Table 8.

In step 1413, the BS determines a handover direction for the MS that will be given to the RS. In step 1415, the BS determines if the determined handover direction indicates transmission of the MOB_BSHO-REQ message of a mandatory handover mode. The handover direction may indicate one of transmission of the MOB_BSHO-REQ message of a mandatory handover mode and transmission of the MOB_BSHO-REQ message of a recommended handover mode.

If the determined handover direction indicates the transmission of the MOB_BSHO-REQ message of the mandatory handover mode, the BS sends an MS handover command message MOB_HO-CMD for commanding transmission of the MOB_BSHO-REQ message of the mandatory handover mode to the RS in step 1417. Thereafter, in step 1423, the BS waits to receive the MOB_HO-IND message (defined in Table 2) indicating execution of a handover by the MS.

Table 14 below illustrates the format of the MOB_HO-CMD message.

**Table 14**

| Syntax | Size (bit) | Notes |
|---|---|---|
| MOB_HO-CMD_Message_format() { | - | |
| Management Message Type = TBD | 8 | - |
| Command indicator | 2 | This field indicates BS's direction |
| | | 00: issue recommended-mode |
| | | MOB_BSHO-REQ |
| | | 01: issue mandatory-mode |
| | | MOB_BSHO-REQ |
| | | 10: issue recommended-mode |
| | | MOB_BSHO-RSP |
| | | 11: issue mandatory-mode |
| | | MOB_BSHO-RSP |
| CID | 16 | Basis CID of MS |
| New resource retain timer flag | 1 | 0: Use resource retain timer negotiated in REG-REQ/RSP |
| | | 1: Use new resource retain timer |
| If(New resource retain timer flag==1) { | | |
| Resource retain timer | 8 | |
| } | | |
| N_Recommended | 6 | Number of recommended target BS/RS |
| For(i=0; i<N_Recommended; i++){ | | |
| Neighbor Node ID | 48 - | |
| Service level prediction | 8 | - |
| HO process optimization | 8 | - |
| HO_ID_included_indicator | 1 | Indicates if the field HO ID is included |
| If(HO_ID_included indicator==1){ | | |
| HO_ID | 8 | ID assigned for used in initial ranging to the target node once this node is selected as the target node |
| } | | |
| Network assisted HO supported | 1 | Indicates that the node supports network assisted HO |
| HO_authorization_policy_support | 8 | Indicates that the authorization policy for the node is negotiated. |
| | | Bit#0: RSA authorization |
| | | Bit#1: EAP authorization |
| | | Bit#2: Authenticated-EAP |
| | | Bit#3: HMAC supported |
| | | Bit#4: CMAC supported |
| | | Bit#5: 64-bit Short-HMAC |
| | | Bit#6: 80-bit Short-HMAC |
| | | Bit#7: 96-bit Short-HMAC |
| | | If all bits are set to 0, the node uses EAP authorization and the value of MAC mode field in the current serving node. |
| } | | |
| Action time | 8 | - |
| } | | |
| | | |

As illustrated in Table 14, the MOB_HO-CMD message includes a Management Message Type indicating the types of a plurality of IEs, i.e., TX messages, a Command indicator indicating the handover direction for the MS, a CID indicating an MS that will receives a handover request message in accordance with the handover direction, and information related to the handover of the MS. The command indicator includes a recommended-mode MOB_BSHO-REQ message for commanding the RS to construct and transmit a MOB_BSHO-REQ message of a recommended mode to the MS, a mandatory-mode MOB_BSHO-REQ message for commanding the RS to construct and transmit a MOB_BSHO-REQ message of a mandatory mode to the MS, a recommended-mode MOB_BSHO-RSP message for commanding the RS to construct and transmit a MOB_BSHO-RSP message of a recommended mode to the MS, and a mandatory-mode MOB_BSHO-RSP message for commanding the RS to construct and transmit a MOB_BSHO-RSP message of a mandatory mode to the MS. The information related to the handover of the MS includes a Neighbor Node ID for a neighboring RS or a neighboring BS that will be contained in the MOB_BSHO-REQ message or the MOB_BSHO-RSP message that is constructed according to each handover direction, a Service level prediction that can be provided from the Neighbor Node during the handover to the Neighbor Node, an HO ID that is assigned for use in initial ranging to the neighbor node selected as a target node, and HO process optimization that is optimized handover information supported by the neighbor node.

On the other hand, if the determined handover direction does not indicate the transmission of the MOB_BSHO-REQ message of the mandatory handover mode, the BS determines in step 1419 if the determined handover direction indicates the transmission of the MOB_BSHO-REQ message of the recommended handover mode. If the determined handover direction indicates the transmission of the MOB_BSHO-REQ message of the recommended handover mode, the BS proceeds to step 1421 to transmit the MOB_HO-CMD message for commanding transmission of the recommended-mode MOB_BSHO-REQ message to the RS in step 1421. If not, the BS directly proceeds to step 1423. In step 1423, the BS waits for receiving message from the MS.

In step 1425, the BS determines if the MOB_HO-IND message (defined in Table 2) containing the handover reject information of the MS is received. If the MOB_HO-IND message containing the handover reject is received, the BS reconstructs in step 1427 a candidate node list suitable for performing the handover of the MS. In step 1429, the BS determines a handover direction for the MS so as to command the RS to send the MOB_BSHO-RSP message (defined in Table 3) containing the reconstructed candidate node list to the MS. The handover direction indicates one of transmission of the MOB_BSHO-RSP message of a mandatory handover mode and transmission of the MOB_BSHO-RSP message of a recommended handover mode.

In step 1431, the BS determines if the handover direction indicates transmission of the MOB_BSHO-RSP message of the mandatory handover mode. If so, the BS proceeds to step 1433 and return to step 1423; and if not, the BS proceeds to step 1435. In step 1433, the BS sends to the RS the MOB_HO-CMD message for commanding transmission of the MOB_BSHO-RSP message of the mandatory handover mode. In step 1435, the BS determines if the handover direction indicates transmission of the MOB_BSHO-RSP message of the recommended handover mode. If so, the BS proceeds to step 1437 and returns to step 1423; and if not, the BS directly returns to step 1423. In step 1437, the BS sends to the RS the MOB_HO-CMD message for commanding transmission of the MOB_BSHO-RSP message of the recommended handover mode.

On the other hand, if the MOB_HO-IND message (defined in Table 2) containing the handover reject information of the MS is not received in step 1425, the BS ends the operation.

FIG. 15 is a flowchart illustrating an operation of the RS for sending the handover request message to the MS upon receipt of the handover request command from the BS in a multi-hop relay BWA system according to the present invention.

Referring to FIG. 15, in step 1511, the RS communicates with the BS and an MS incapable of communicating with the BS, thereby relay a signal between the BS and the MS. In step 1513, the RS receives the MOB_HO-CMD message (defined in Table 14) from the BS. In step 1515, the RS determines if the handover direction in the MOB_HO-CMD message indicates transmission of the MOB_BSHO-REQ message of the mandatory handover mode. If so, the RS proceeds to step 1517; and if not, the RS proceeds to step 1519. In step 1517, the RS constructs the MOB_BSHO-REQ message of the mandatory handover mode using the MS handover information in the MOB_HO-CMD message, and transmits the constructed MOB_BSHO-REQ message to the MS.

In step 1519, the RS determines if the handover direction indicates transmission of the MOB_BSHO-REQ message of the recommended handover mode. If so, the RS proceeds to step 1521; and if not, the RS proceeds to step 1523. In step 1521, the RS constructs the MOB_BSHO-REQ message of the recommended handover mode using the MS handover information in the MOB_HO-CMD message, and transmits the constructed MOB_BSHO-REQ message to the MS.

In step 1523, the RS determines if the handover direction indicates transmission of the MOB_BSHO-RSP message of the mandatory handover mode. If so, the RS proceeds to step 1525, and if the handover direction indicates transmission of the MOB_BSHO-RSP message of the recommended handover mode, the RS proceeds to step 1527. In step 1525, the RS constructs the MOB_BSHO-RSP message of the mandatory handover mode using the MS handover information in the MOB_HO-CMD message, and transmits the constructed MOB_BSHO-RSP message to the MS. In step 1527, the RS constructs the MOB_BSHO-RSP message of the recommended handover mode using the MS handover information in the MOB_HO-CMD message, and transmits the constructed MOB_BSHO-RSP message to the MS. Thereafter, the RS ends the operation.

In step 1423, upon receiving from the MS the MOB_HO-IND message which informs that the MS confirms the handover request, the BS may send an MSHO-notify message to the RS to inform of the handover of the MS as in step 1223.

Configurations of an MS, an RS, and a BS will be described. Since the MS, RS, and BS have the same interface module (communication module), the MS, RS, and BS have the same block configuration. Thus, the configurations of the MS, RS, and BS will be described with reference to one block diagram.

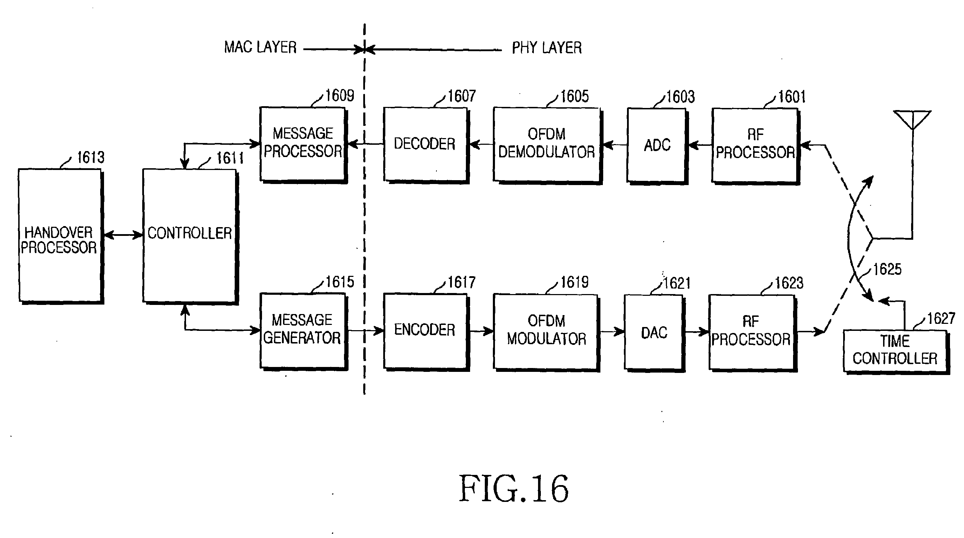

FIG. 16 is a block diagram illustrating an MS (RS or BS) according to the present invention. In the current embodiment, it is assumed that the MS (RS or BS) uses a Time Division Duplex (TDD)-OFDMA scheme.

Referring to FIG. 16, the MS (RS or BS) includes a receiving (RX) radio frequency (RF) processor 1601, an analog-to-digital converter (ADC) 1603, an OFDM demodulator 1605, a decoder 1607, a message processor 1609, a controller 1611, a handover processor 1613, a message generator 1615, an encoder 1617, an OFDM modulator 1619, a digital-to-analog converter (DAC) 1621, a transmitting (TX) RF processor 1623, a switch 1625, and a time controller 1627.

The time controller 1627 controls a switching operation of the switch 1625 based on frame synchronization. For example, when being in an RX section of a frame, the time controller 1627 controls the switch 1625 so that an antenna is connected to the RX RF processor 1601. When being in a TX section of the frame, the time controller 1627 controls the switch 1625 so that the antenna is connected to the TX RF processor 1623.

In the RX section of the frame, the RX RF processor 1601 converts an RF signal received through the antenna into a baseband analog signal. The ADC 1603 samples the analog signal received from the RX RF processor 1601 so as to convert the analog signal into a sampled data (digital signal). The OFDM demodulator 1605 performs Fast Fourier Transform (FFT) on the sampled data to output frequency-domain data.

The decoder 1607 selects data of desired subcarriers from the frequency-domain data. The decoder 1607 demodulates and decodes the selected data depending on a predetermined modulation and coding scheme (MCS) level.

The message processor 1609 processes a control message from the decoder 1607 and sends the results of the processing to the controller 1611. The message processor 1609 extracts various control information from a received control message related to a handover and provides the extracted control information to the controller 1611.

The controller 1611 performs processing according to the information received from the message processor 1609 and provides the results of the processing to the message generator 1615. The handover processor 1613 generates and manages handover related information.

The message generator 1615 generates a message using various information received from the controller 1611 and provides the message to the encoder 1617. The message generator 1615 generates handover related control message and sends the message to the encoder 1617.

The encoder 1617 encodes and modulates the message received from the message generator 1615 according to a MCS level. The OFDM modulator 1619 processes data received from the encoder 1617 by Inverse Fast Fourier Transform (IFFT), obtaining sampled data (OFDM symbols). The DAC 1621 converts the sampled data into an analog signal. The TX RF processor 1623 converts the analog signal received from the DAC 1621 into an RF signal and transmits the RF signal through the antenna.

In the above-described configuration, the controller 1611 controls the message processor 1609, the message generator 1615, and use of the Handover processor 1613, as a protocol controller. The controller 1611 can perform the functions of the message processor 1609, the message generator 1615, and the Handover processor 1613. Although separate units are provided for respective functions of the controller 1611, the controller 1611 can perform all or some of the functions instead of such separate units.

Operations of the MS, the RS, and the BS will now be described with reference to the configuration shown in FIG. 16, concentrating on a control message processing in a MAC layer.

The operation of the MS will be first described. The message processor 1609 processes a control message from an RS or BS and sends the results of the processing to the controller 1611. For example, when an MOB_BSHO-REQ message (defined in Table 1) or an MOB_BSHO-RSP message (defined in Table 3) is received, the message processor 1609 extracts various control information from the message and sends the extracted control information to the controller 1611. The controller 1611 controls the handover processor 1613 according to the control information received from the message processor 1609.

Under the control of the controller 1611, the handover processor 1613 generates information required for the handover of the MS and sends the information to the controller 1611. For example, when a serving station requests a handover, the handover processor 1613 performs operations such as determining if the requested handover is possible, scanning candidate target nodes in a list recommended by the serving station, finally determining whether to perform the request handover, selecting a proper target node for the handover. The handover processor 1613 sends the results of the operation to the controller 1611.

The message generator 1615 generates a message destined for the RS or the BS and sends the message to a physical layer under the control of the controller 1611. For example, the message generator 1615 generates a MOB_HO-IND message (defined in Table 2) and sends the message to the encoder 1617 of a physical layer. The message generated by the message generator 1615 is processed suitable for a physical layer and is transmitted to a corresponding destination through the antenna.

The operation of the RS will now be described. The message processor 1609 processes a control message received from an MS, a BS, or other RSs and sends the results of the processing to the controller 1611. For example, the message may be: an MOB_HO-IND message (defined in Table 2) from the MS; an MOB_BSHO-REQ message (defined in Table 1), an MOB_BSHO-RSP message (defined in Table 3), an MSHO-INFORM message (defined in Table 7), an MSHO-INFORM-ACK message (defined in Table 8), an HO-notify message (defined in Table 10), an MSHO-INFO-RSP message (Table 13), or an MOB_HO-CMD message (defined in Table 14) from the BS; or an MSHO-INFORM message (defined in Table 7), an MSHO-INFORM-ACK message (defined in Table 8), or an HO-notify message (defined in Table 10) from other RSs. Upon receiving such a message, the message processor 1609 extracts various control information from the message and sends the extracted control information to the controller 1611. The controller 1611 performs operations corresponding to the control information received from the message processor 1609.

Under the control of the controller 1611, the handover processor 1613 generates information required for the handover of the MS and sends the information to the controller 1611. For example, the handover processor 1613 performs operations such as determining if the MS has to be handed over, obtaining information about candidate target nodes to be recommended to the MS, collecting information about a neighboring node suitable for the handover of the MS, transmitting a handover request to the MS, and determining if the MS is handed over. Then, the handover processor 1613 sends the results of the operations to the controller 1611.

Under the control of the controller 1611, the message generator 1615 may generate the following messages: an MOB_BSHO-REQ message (defined in Table 1) and an MOB_BSHO-RSP message (defined in Table 3) that are destined for the MS; an MSHO-INFORM message (defined in Table 7), an MSHO-INFORM-ACK message (defined in Table 8), an MSHO-INFO-REQ message (defined in Table 12), and an MOB_HO-IND message (defined in Table 2) that are destined for the BS; and an MSHO-INFORM message (defined in Table 7), an MSHO-INFORM-ACK message (defined in Table 8), and an HO-notify message (defined in Table 10) that are destined for other RSs. The messages generated by the message generator 1615 are processed suitable for a physical layer and are transmitted to desired destinations through the antenna.

The operation of the BS will now be described. The message processor 1609 processes a control message received from an MS, an RS, or other BSs and sends the results of the processing to the controller 1611. For example, the message processor 1609 may receive an MOB_HO-IND message (defined in Table 2) from the MS; an MOB_BSHO-REQ message (defined in Table 1), an MOB_HO-IND message (defined in Table 2), an MSHO-INFORM-ACK message (defined in Table 8), or an MSHO-INFO-REQ message (defined in Table 12) from the RS; or an HO-request message (defined in Table 4), an HO-response message (defined in Table 6) or an HO-confirm message (defined in Table 11) from other BSs. Upon receiving such a message, the message processor 1609 extracts various control information from the message and sends the extracted control information to the controller 1611. The controller 1611 performs operations corresponding to the control information received from the message processor 1609.

Under the control of the controller 1611, the handover processor 1613 generates information required for the handover of the MS and sends the information to the controller 1611. For example, the handover processor 1613 performs operations such as determining which MS has to be handed over, obtaining information about candidate target nodes to be recommended to the MS, informing a neighboring cell BS of the possibility of handover of the MS, preparing a candidate target node list for the MS by collecting information about neighboring cell BSs and serving cell nodes, and obtaining information about a target node to which the MS is to be handed over. Then, the handover processor 1613 sends the results of the operations to the controller 1611.

Under the control of the controller 1611, the message generator 1615 a message destined for the MS, the RS, or other BSs and sends the message to a physical layer. For example, the message generator 1615 may generate the following messages: an MOB_BSHO-REQ message (defined in Table 1) and an MOB_BSHO-RSP message (defined in Table 3) that are destined for the MS; an MOB_BSHO-REQ message (defined in Table 1) and an MOB_BSHO-RSP message (defined in Table 3), an MSHO-INFORM-ACK message (defined in Table 8), an HO-notify message (defined in Table 10), an MSHO-INFO-RSP message (defined in Table 13), and an MOB_HO-CMD message (defined in Table 14) that are destined for the RS; and an HO-request message (defined in Table 4), an HO-response message (defined in Table 6), and an HO-confirm message (defined in Table 11) that are destined for other BSs. The messages generated by the message generator 1615 are processed suitable for a physical layer and are transmitted to desired destinations through the antenna.

As described above, according to the present invention, when a direct link between a BS and an MS is poor in a multi-hop relay BWA system, an RS is used to form a multi-hop relay path between the MS and the BS and provide the same services and functions to the MS as the BS. Particularly, according to the present invention, there is provided a method of handing a handover of an MS in a multi-hop relay BWA system. The method ensures communication persistence of the MS having mobility and makes it easy to manage load on a cell and configure RS arrangement. Furthermore, according to the present invention, a handover control message can be directly transmitted between RSs without passing through a serving BS, so that a time delay by the serving BS can be prevented.

While the invention has been shown and described with reference to certain preferred embodiments thereof, it will be understood by those skilled in the art that various changes in form and details may be made therein without departing from the spirit and scope of the invention as defined by the appended claims.

## Claims

1. A communication method of a Relay Station (RS) in a wireless access communication system, the communication method comprising the steps of:
receiving from a Base Station (BS) a handover request message including a candidate node list;
sending to a Mobile Station (MS) the handover request message; and
receiving from the MS a handover indication message indicating whether to perform a handover.

2. The communication method of claim 1, wherein the RS encapsulates or decapsulates an identifier of the MS into or from a message transmitted between the MS and the BS via the RS.

3. The communication method of claim 1, wherein the candidate node list includes at least one of a serving BS, a serving cell RS, a neighboring cell BS, and a neighboring cell RS.

4. The communication method of claim 1, wherein the handover request message includes information about each candidate node in the candidate node list, the information including at least one of an identifier of the candidate node, a preamble index of the candidate node, and an available service level at the candidate node.

5. The communication method of claim 1, wherein the handover indication message includes at least one of a handover indication type indicating whether to perform a handover, an identifier of a target node, and a preamble index of the target node.

6. The communication method of claim 1, further comprising:
sending to the BS the handover indication message; and
disconnecting the MS when the handover indication message indicates execution of the handover.

7. The communication method of claim 1, further comprising:
sending to the BS the handover indication message; and
continuing to relay communication between the MS and the BS when the handover indication message indicates cancellation of the handover.

8. The communication method of claim 1, further comprising:
sending to the BS the handover indication message; and
receiving a handover response message including a reconstructed candidate node list from the BS when the handover indication message indicates rejection of the handover; and
sending to the MS the handover response message.

9. A communication method of a BS in a wireless access communication system, the communication method comprising the steps of:
preparing a candidate node list when an MS communicating with an RS has to be handed over;
sending to the MS via the RS a handover request message including the candidate node list; and
receiving from the MS via the RS a handover indication message indicating whether to perform a handover.

10. The communication method of claim 9, wherein the candidate node list includes at least one of the BS, a serving cell RS, a neighboring cell BS, and a neighboring cell RS.

11. The communication method of claim 9, wherein the handover request message includes information about each candidate node in the candidate node list, the information including at least one of an identifier of the candidate node, a preamble index of the candidate node, and an available service level at the candidate node.

12. The communication method of claim 9, wherein the handover indication message includes at least one of a handover indication type indicating whether to perform a handover, an identifier of a target node, and a preamble index of the target node.

13. The communication method of claim 9, wherein the MS handover is determined based on at least one of an inter-cell load balancing condition, an RS rearrangement state, and a scanning result reported by the MS.

14. The communication method of claim 9, wherein the RS encapsulates or decapsulates an identifier of the MS into or from the messages transmitted between the MS and the BS via the RS.

15. The communication method of claim 9, wherein the step of preparing the candidate node list comprises:
requesting handover related information of neighboring nodes for the handover of the MS;
receiving from the neighboring nodes the handover related information; and
preparing the candidate node list using the received handover related information.

16. The communication method of claim 9, wherein if the handover indication message indicates execution of the handover, the communication method further comprises:
finding a target node in the handover indication message;
performing a network re-entry procedure with the MS when the target node is the BS;
sending a handover notification message to the target node when the target node is a serving cell node; and
disconnecting the MS after sending a handover notification message to a BS of the neighboring cell when the target node is a node of a neighboring cell.

17. The communication method of claim 9, further comprising:
continuing to communicate with the MS if the handover indication message indicates cancellation of the handover.

18. The communication method of claim 9, further comprising:
reconstructing the candidate node list to transmit the reconstructed candidate node list to the MS if the handover indication message indicates rejection of the handover.

19. A communication method of an RS in a wireless access communication system, the communication method comprising the steps of:
preparing a candidate node list when an MS communicating with an RS has to be handed over;
sending to the MS a handover request message including the candidate node list; and
receiving from the MS a handover indication message indicating whether to perform a handover.

20. The communication method of claim 19, wherein the candidate node list includes at least one of a serving BS, a serving cell RS, a neighboring cell BS, and a neighboring cell RS.

21. The communication method of claim 19, wherein the handover request message includes information about each candidate node in the candidate node list, the information including at least one of an identifier of the candidate node, a preamble index of the candidate node, and an available service level at the candidate node.

22. The communication method of claim 19, wherein the handover indication message includes at least one of a handover indication type indicating whether to perform a handover, an identifier of a target node, and a preamble index of the target node.

23. The communication method of claim 19, wherein the step of preparing the candidate node list comprises:
requesting handover related information of neighboring nodes for the handover of the MS;
receiving from the neighboring nodes the handover related information; and
preparing the candidate node list using the received handover related information.

24. The communication method of claim 23, wherein the handover related information includes a bandwidth and a service level to be provided for the MS.

25. The communication method of claim 23, wherein the RS communicates directly with the neighboring nodes.

26. The communication method of claim 19, further comprising:
sending the handover indication message to a serving BS when the handover indication message indicates execution of the handover.

27. The communication method of claim 19, wherein if the handover indication message indicates execution of the handover, the communication method further comprises:
sending to a target node set in the handover indication message; a handover notification message and
disconnecting the MS after sending the handover notification message.

28. The communication method of claim 27, wherein the step of sending the handover notification message comprises:
sending directly to the target node the handover notification message when the RS is capable of directly communicating with the target node; and
sending to the serving BS the handover notification message after adding an identifier of the MS to the handover notification message when the RS is not capable of directly communicating with the target node.

29. The communication method of claim 19, further comprising:
continuing to relay communication between the MS and a serving BS if the handover indication message indicates cancellation of the handover.

30. The communication method of claim 19, further comprising:
reconstructing the candidate node list to transmit the reconstructed candidate node list to the MS if the handover indication message indicates rejection of the handover.

31. A communication method of a BS in a wireless access communication system, the communication method comprising the steps of:
receiving from an RS a message informing of the possibility of handover of an MS;
collecting handover related information from candidate nodes listed in the message; and
sending to the RS a message including the handover related information.

32. The communication method of claim 31, further comprising:
determining if a target node set in the received handover indication message is the BS when the BS receives a handover indication message from the RS; and
performing a network re-entry procedure with the MS if the target node set in the received handover indicator message is the BS.

33. The communication method of claim 31, further comprising:
determining if a target node set in the received handover indication message is a node of a neighboring cell when the BS receives a handover indication message from the RS; and
sending a message to a BS of the neighboring cell so as to inform of the handover of the MS if the target node set in the received handover indication message is a node of a neighboring cell.

34. A method of handling a handover in a communication system, the method comprising the steps of:
preparing a candidate node list at a serving BS by collecting handover related information from neighboring nodes for the handover of the MS when an MS has to be handed over;
transmitting to an RS communicating with the MS a handover request message including the candidate node list from the serving BS;
transmitting from the RS to the MS the handover request message; and
transmitting from the MS to the RS a handover indication message indicating whether to perform the handover.

35. The method of claim 34, wherein the candidate node list includes at least one of the serving BS, a serving cell RS, a neighboring cell BS, and a neighboring cell RS.

36. The method of claim 34, wherein the RS encapsulates or decapsulates an identifier of the MS into or from the message transmitted between the MS and the serving BS via the RS.

37. The method of claim 34, further comprising:
transmitting from the RS to the serving BS the handover indication message; and
disconnecting the MS from the RS when the handover indication message indicates execution of the handover.

38. The method of claim 34, further comprising:
transmitting from the RS to the serving BS the handover indication message; and
reconstructing the candidate node list at the serving BS and transmitting a handover response message including the reconstructed candidate node list from the serving BS to the RS when the handover indication message indicates rejection of the handover; and
transmitting from the RS to the MS the handover response message.

39. A method of handling a handover in a communication system, the method comprising the steps of:
preparing a candidate node list at a serving BS by collecting handover related information from neighboring nodes for the handover of the MS when an MS has to be handed over;
transmitting from the RS to the MS a handover request message including the candidate node list; and
transmitting from the MS to the RS a handover indication message indicating whether to perform the handover.

40. The method of claim 39, wherein the candidate node list includes at least one of a serving BS, a serving cell RS, a neighboring cell BS, and a neighboring cell RS.

41. The method of claim 39, further comprising:
transmitting a handover notification message from the RS to a target node set in the handover indication message when the handover indication message indicates execution of the handover; and
reconstructing the candidate node list at the RS and transmitting the list from the RS to the MS when the handover indication message indicates rejection of the handover.

42. A communication method of an RS in a communication system, the communication method comprising the steps of:
forwarding from a BS to an MS a handover request message;
forwarding from the MS to the BS a handover indication message indicating whether to perform a handover; and
releasing context information of the MS when a message informing of the handover of the MS is received from the BS.

43. An apparatus for an RS in a communication system, the apparatus comprising:
a message generator for generating a handover request message including a candidate node list;
a transmitter for converting the handover request message from the message generator into a radio specification format so as to transmit the converted handover request message to an MS; and
a message processor for processing a handover indication message received from the MS in response to the handover request message, the handover indication message including information about whether to perform a handover.

44. The apparatus of claim 43, wherein the candidate node list includes at least one of a serving BS, a serving cell RS, a neighboring cell BS, and a neighboring cell RS.

45. The apparatus of claim 43, wherein the handover request message includes information about each candidate node in the candidate node list, the information including at least one of an identifier of the candidate node, a preamble index of the candidate node, and an available service level at the candidate node.

46. The apparatus of claim 43, wherein the handover indication message includes at least one of a handover indication type indicating whether to perform a handover, an identifier of a target node, and a preamble index of the target node.

47. A communication method of a Base Station (BS) in a wireless access communication system, the communication method comprising the steps of:
if an handover of a Mobile Station (MS) communicating with a Relay Station (RS) is necessary, constructing a candidate node list and determining a handover direction;
transmitting to the RS a handover command message including the candidate node list and the handover direction information; and
receiving from the MS via the RS a handover indication message indicating whether to perform a handover.

48. The communication method of claim 47, wherein the handover direction indicates one of transmission of a handover request message of a recommended handover mode and transmission of a handover request message of a mandatory handover mode.

49. The communication method of claim 47, wherein the handover command message includes at least one of handover direction information, MS IDs, candidate node IDs, the service level available at a candidate node, and information about handover process optimization.

50. The communication method of claim 47, wherein the handover indication message includes at least one of a handover indication type indicating whether to perform a handover, an identifier of a target node, and a preamble index of the target node.

51. The communication method of claim 47, further comprising, if the handover indication message indicates rejection of a handover, the steps of:
reconstructing a candidate node list and determining a handover direction; and
transmitting to the RS the handover command message including the reconstructed candidate node list and the handover direction information.

52. The communication method of claim 51, wherein the handover direction indicates one of transmission of a handover response message of a recommended handover mode and transmission of a handover response message of a mandatory handover mode.

53. A communication method of a Relay Station (RS) in a wireless access communication system, the communication method comprising the steps of:
receiving from a Base Station (BS) a handover command message indicating a handover direction;
constructing a handover request message or a handover response message in accordance with the handover direction information; and
transmitting the constructed message to a Mobile Station (MS).

54. The communication method of claim 53, wherein the constructed message is one of a handover request message of a recommended handover mode, a handover request message of a mandatory handover mode, a handover response message of a recommended handover mode, and a handover response message of a mandatory handover mode.

55. The communication method of claim 53, wherein the handover command message includes at least one of handover direction information, MS IDs, candidate node IDs, the service level available at a candidate node, and information about handover process optimization.

56. The communication method of claim 53, wherein the handover request message includes at least one of a candidate node ID, a preamble index, the service level available at a candidate node, and handover mode information.

57. The communication method of claim 53, wherein the handover response message includes at least one of a candidate node ID, a preamble index, the service level available at a candidate node, and handover mode information.

58. The communication method of claim 53, further comprising the steps of:
receiving a handover indication message indicating whether to perform a handover from the MS after the transmission of the handover request message to the MS; and
relaying the handover indication message to the BS.

59. The communication method of claim 58, wherein the handover indication message includes at least one of a handover indication type indicating whether to perform a handover, an identifier of a target node, and a preamble index of the target node.

60. A method of handling a handover in a communication system, the method comprising the steps of:
preparing a candidate node list at a serving BS and determining a handover direction when an MS has to be handed over;
transmitting to an RS a handover command message including the candidate node list and the handover direction information;
preparing at the RS a handover request message using the information of the handover command message;
transmitting from the RS to the MS the handover request message; and
transmitting to the BS via the RS a handover indication message indicating whether to perform the handover.

61. The method of claim 60, wherein the handover command message includes at least one of handover direction information, MS IDs, candidate node IDs, the service level available at a candidate node, and information about handover process optimization.

62. The method of claim 60, wherein the handover direction set in the handover command message indicates one of transmission of a handover request message of a recommended handover mode and transmission of a handover request message of a mandatory handover mode, transmission of a handover response message of a recommended handover mode, and transmission of a handover response message of a mandatory handover mode.

63. The method of claim 60, wherein the handover indication message includes at least one of a handover indication type indicating whether to perform a handover, an identifier of a target node, and a preamble index of the target node.

64. The method of claim 60, wherein the handover request message includes at least one of a candidate node ID, a preamble index, the service level available at a candidate node, and handover mode information.

65. The method of claim 60, further comprising, if the handover indication message indicates rejection of a handover, the steps of:
reconstructing a candidate node list at the BS and determining the handover direction;
transmitting from the BS to the RS the handover command message including the reconstructed candidate node list and the handover direction information; and
preparing at the RS a handover response message using the information of the handover command message and transmitting the handover response message from the RS to the MS.

66. The method of claim 65, wherein the handover response message includes at least one of a candidate node ID, a preamble index, the service level available at a candidate node, and handover mode information.
